# EUROPEAN PATENT APPLICATION

(11) **EP 1 211 835 A1**
(43) Date of publication of application: **05.06.2002**
(21) Application number: 01947922.9
(22) Date of filing: 09.07.2001
(51) Int. Cl.: H04J 11/00

(54) **MULTI-CARRIER COMMUNICATION DEVICE AND PEAK POWER SUPPRESSING METHOD**

(30) Priority: 10.07.2000 JP 2000208923; 21.09.2000 JP 2000287765
(71) Applicant: MATSUSHITA ELECTRIC INDUSTRIAL CO., LTD., Kadoma-shi, Osaka 571-8501 (JP)
(72) Inventor: SUMASU, Atsushi, Yokosuka-shi, Kanagawa 239-0833 (JP); KATO, Osamu, Yokosuka-shi, Kanagawa 237-0066 (JP); UESUGI, Mitsuru, Yokosuka-shi, Kanagawa 238-0048 (JP); UE, Toyoki, Yokosuka-shi, Kanagawa 238-0022 (JP); SUDO, Hiroaki, Yokosuka-shi, Kanagawa 239-0847 (JP); INOGAI, Kazunori, Yokohama-shi, Kanagawa 236-0032 (JP)
(74) Representative: Grünecker, Kinkeldey, Stockmair & Schwanhäusser Anwaltssozietät
(86) International application number: JP0105933
(87) International publication number: WO0205467

(57) **Abstract**

After digital modulation by digital modulation section 101, OFDM symbols (first OFDM symbol group) converted to parallel by S/P conversion section 102 are output to mapping section 103, where of a plurality of subcarriers on which the first OFDM symbol group is superimposed, the OFDM symbols superimposed on a predetermined number of subcarriers are set to "0" to expand thereby the OFDM symbol space. As many OFDM symbols as those of the first OFDM symbol group are selected in ascending order of peak power from among symbol patterns in this space, the first OFDM symbol group is associated with this selected OFDM symbol, this associated and selected OFDM symbol is output, this selected OFDM symbol is subjected to an inverse fast Fourier transform by IFFT section 104 and then transmitted.

## Description

### Technical Field

The present invention relates to a multi-carrier communication apparatus to which an OFDM (Orthogonal Frequency Division Multiple) system is applied and a peak power suppression method for such a multi-carrier communication apparatus, and more particularly, to a multi-carrier communication apparatus and a peak power suppression method for such a multi-carrier communication apparatus suitable for a mobile station apparatus such as a cellular phone and portable TV telephone set in a mobile unit communication system, a base station apparatus communicating with this mobile station apparatus and digital TV broadcasting or digital speech broadcasting transmission/reception apparatus.

### Background Art

One of conventional multi-carrier communication apparatuses and peak power suppression methods for such multi-carrier communication apparatuses of this kind is described in Unexamined Japanese Patent Publication No.HEI 7-143098.

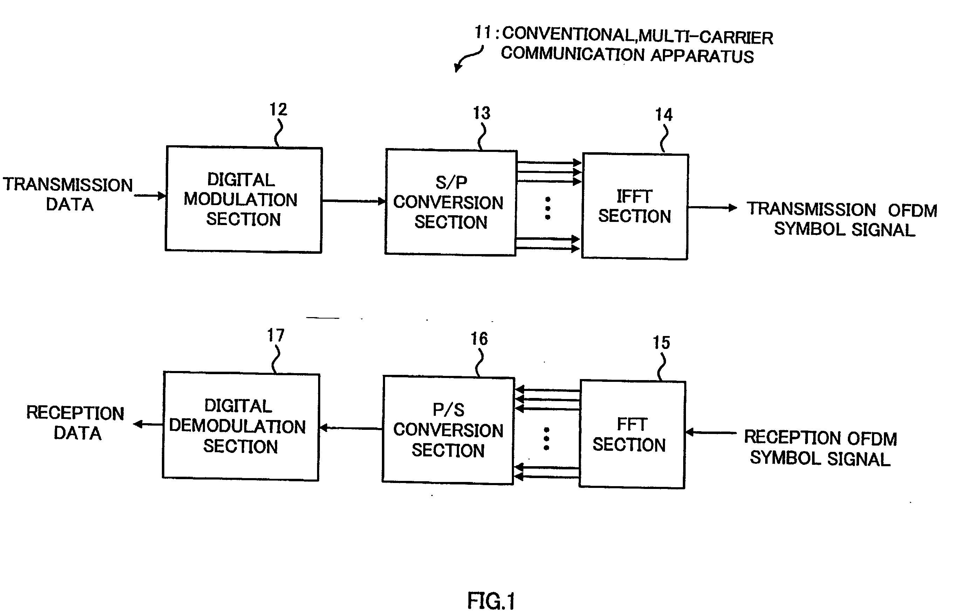

FIG.1 is a block diagram showing a configuration of a conventional multi-carrier communication apparatus.

Multi-carrier communication apparatus 11 shown in this FIG.1 comprises digital modulation section 12, S/P (Serial/Parallel) conversion section 13 and IFFT (inverse fast Fourier transform) section 14 on the transmitting side and FFT (fast Fourier transform) section 15, P/S (Parallel/Serial) conversion section 16 and digital demodulation section 17 on the receiving side.

In such a configuration, digital modulation section 12 on the transmitting side carries out digital modulation on transmission data according to a modulation system such as BPSK (Binariphase Phase Shift Keying) and 16QAM (Quadrature Amplitude Modulation), etc.

The serial data after modulation is converted to parallel data (digital symbol) by S/P conversion section 13, then this parallel data is subjected to an inverse fast Fourier transform processing by IFFT section 14 where this parallel data is superimposed on subcarriers of different phases and output as a transmission OFDM symbol signal which is continuous time-series data.

On the other hand, on the receiving side, a reception OFDM symbol signal is subjected to a fast Fourier transform processing by FFT section 15, where data superimposed on subcarriers of different phases are separated, these separated parallel data are converted to serial data by P/S conversion section 16 and this serial data is digital-demodulated by digital demodulation section 17 and output.

However, since the conventional apparatus transmits transmission data converted to parallel data and superimposed on a plurality of subcarriers, there is no correlation between data on different subcarriers and for this reason if phases of these subcarriers overlap with one another, the OFDM symbol will have an extremely large signal amplitude.

Thus, when a peak voltage of a signal increases during transmission and this peak voltage is amplified by an amplifier, the peak part of the signal is trimmed according to the upper limit gain of the amplifier.

Using a large amplifier to prevent this will increase the size of the apparatus as a whole, which causes problems such as increasing the price of the apparatus, increasing power consumption and increasing heating.

Methods of suppressing peak voltages include the one described in Unexamined Japanese Patent Publication No.HEI 7-143098 which sets an upper limit of voltages and simply cuts voltages that exceed the upper limit. However, simply cutting a peak voltage causes the signal to distort and widen its band, resulting in problems such as deteriorating an error rate during reception (deterioration of transmission characteristic) and increasing interference with signals and systems in neighboring bands due to increased unnecessary out-of-band emissions.

### Disclosure of Invention

It is an object of the present invention to provide a multi-carrier communication apparatus and a peak power suppression method for such a multi-carrier communication apparatus capable of suppressing a peak voltage of a signal with a simple apparatus configuration without deteriorating a transmission characteristic or increasing unnecessary emissions or increasing the size of the apparatus.

This object can be attained by converting signals expressed with two values to signals expressed with three values, generating signals containing amplitude "0" in the subcarrier direction, thereby reducing the possibility that the phases of signals of subcarriers will overlap with one another, reducing the number of overlapping phases and thereby suppressing peak voltages of transmission signals.

### Brief Description of Drawings

FIG.1 is a block diagram showing a configuration of a conventional multi-carrier communication apparatus;
FIG.2 is a block diagram showing a configuration of a multi-carrier communication apparatus according to Embodiment 1 of the present invention;
FIG.3 illustrates OFDM symbol patterns before conversion used in the multi-carrier communication apparatus of the above-described embodiment;
FIG.4 illustrates OFDM symbol patterns after conversion used in the multi-carrier communication apparatus of the above-described embodiment;
FIG.5 illustrates a correspondence table of OFDM symbol patterns used in the multi-carrier communication apparatus of the above-described embodiment;
FIG.6 illustrates OFDM symbol patterns before conversion used in the multi-carrier communication apparatus of the above-described embodiment;
FIG.7 illustrates a correspondence table of OFDM symbol patterns used in the multi-carrier communication apparatus of the above-described embodiment;
FIG.8 is a block diagram showing a configuration of a multi-carrier communication apparatus according to Embodiment 2 of the present invention;
FIG.9 is a block diagram showing a configuration of a multi-carrier communication apparatus according to Embodiment 3 of the present invention;
FIG.10 is a block diagram showing a configuration of a multi-carrier communication apparatus according to Embodiment 4 of the present invention;
FIG.11 illustrates a symbol decision operation in the multi-carrier communication apparatus of the above-described embodiment;
FIG.12 illustrates a symbol decision operation in the multi-carrier communication apparatus of the above-described embodiment;
FIG.13 illustrates an example of a table of correspondence between pre-conversion symbol patterns and post-conversion symbol patterns by a pattern conversion section according to Embodiment 5 of the present invention;
FIG.14 illustrates an example of a table of correspondence between pre-conversion symbol patterns and post-conversion symbol patterns by a pattern conversion section according to Embodiment 6 of the present invention;
FIG.15 illustrates OFDM symbol patterns according to Embodiment 7 of the present invention;
FIG.16 illustrates an example of a table of correspondence between pre-conversion symbol patterns and post-conversion symbol patterns by the pattern conversion section of the above-described embodiment;
FIG.17 illustrates an example where two symbols of amplitude "0" are placed on 8 subcarriers according to Embodiment 8 of the present invention;
FIG.18 illustrates an example of a table of correspondence between pre-conversion symbol patterns and post-conversion symbol patterns by the pattern conversion section of the above-described embodiment;
FIG.19 is a block diagram showing a configuration of a multi-carrier communication apparatus according to Embodiment 9 of the present invention;
FIG.20 illustrates an example of converting data expressed with two values to data expressed with three values according to the above-described embodiment;
FIG.21 is a block diagram showing a configuration of a multi-carrier communication apparatus according to Embodiment 10 of the present invention;
FIG.22A illustrates an example of signal processing according to the above-described embodiment;
FIG.22B illustrates an example of signal processing according to the above-described embodiment;
FIG.22C illustrates an example of signal processing according to the above-described embodiment;
FIG.23 is a block diagram showing a configuration of a multi-carrier communication apparatus according to Embodiment 11 of the present invention;
FIG.24 is a block diagram showing a configuration of a multi-carrier communication apparatus according to Embodiment 12 of the present invention;
FIG.25 is a block diagram showing a configuration of a multi-carrier communication apparatus according to Embodiment 13 of the present invention;
FIG.26A illustrates an example of signal processing according to the above-described embodiment;
FIG.26B illustrates an example of signal processing according to the above-described embodiment;
FIG.26C illustrates an example of signal processing according to the above-described embodiment;
FIG.27 is a block diagram showing a configuration of a multi-carrier communication apparatus according to Embodiment 14 of the present invention;
FIG.28A illustrates an example of signal processing according to the above-described embodiment;
FIG.28B illustrates an example of signal processing according to the above-described embodiment;
FIG.28C illustrates an example of signal processing according to the above-described embodiment;
FIG.28D illustrates an example of signal processing according to the above-described embodiment;
FIG.28E illustrates an example of signal processing according to the above-described embodiment;
FIG.29A illustrates QPSK modulation signal points in the multi-carrier communication apparatus according to an embodiment of the present invention;
FIG.29B illustrates QPSK modulation signal points in the multi-carrier communication apparatus according to an embodiment of the present invention;
FIG.30A illustrates 16QAM signal points in the multi-carrier communication apparatus according to an embodiment of the present invention; and
FIG.30B illustrates 16QAM signal points in the multi-carrier communication apparatus according to an embodiment of the present invention.

### Best Mode for Carrying out the Invention

Noticing the fact that the peak amplitude of an entire signal reduces as a result of applying successive coding processing to signals to be sent in multi-carrier communications to generate signals containing amplitude "0" and thereby generate subcarriers not to be sent, the present inventor et al. has discovered that it is possible to suppress a peak voltage of a transmission signal during a multi-carrier communication by applying successive coding processing to the signal to be sent and sending the signal distributed by frequency area.

With reference now to the attached drawings, embodiments of the present invention will be explained in detail below.

### (Embodiment 1)

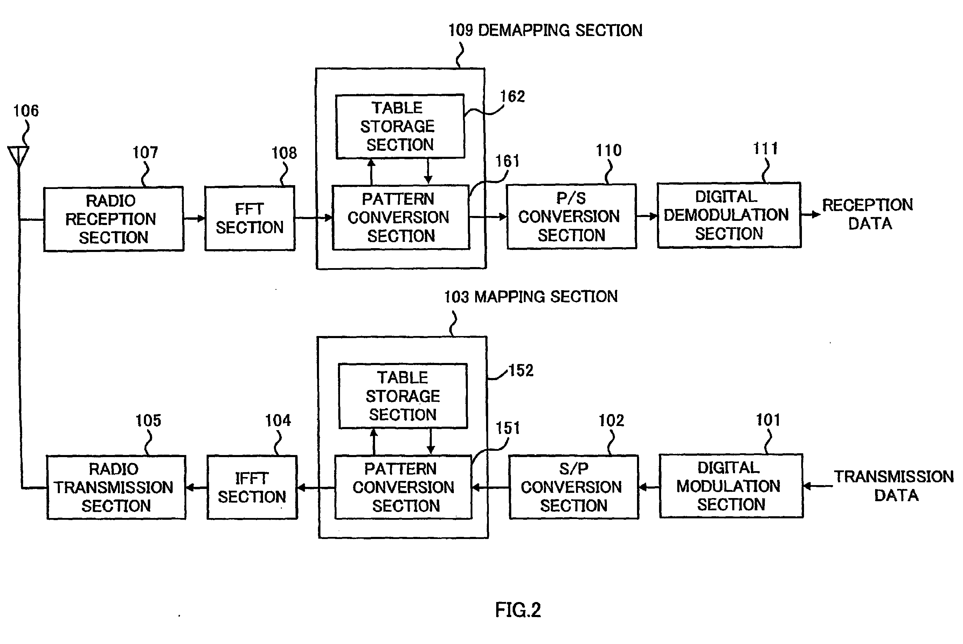

FIG.2 is a block diagram showing a configuration of a multi-carrier communication apparatus according to Embodiment 1 of the present invention.

The multi-carrier communication apparatus according to Embodiment 1 of the present invention is mainly constructed of digital modulation section 101, S/P conversion section 102, mapping section 103, IFFT section 104, radio transmission section 105, antenna 106, radio reception section 107, FFT section 108, demapping section 109, P/S conversion section 110 and digital demodulation section 111.

Mapping section 103 is constructed of pattern conversion section 151 and table storage section 152. On the other hand, demapping section 109 is constructed of pattern conversion section 161 and table storage section 162.

In FIG.2, digital modulation section 101 digital-modulates transmission data and outputs the modulated serial data to serial/parallel (S/P) conversion section 102. S/P conversion section 102 converts the serial data to parallel data and each data piece is assigned to a subcarrier and output to pattern conversion section 151 of mapping section 103 as a symbol pattern before conversion.

Pattern conversion section 151 converts a pre-conversion symbol pattern to a post-conversion symbol pattern and outputs this symbol pattern signal to IFFT section 104. Table storage section 152 stores information on the correspondence between pre-conversion symbol patterns and post-conversion symbol patterns and outputs the correspondence information according to a reference by pattern conversion section 151.

IFFT section 104 performs an inverse fast Fourier transform on the post-conversion symbol pattern and outputs the transmission signal after the inverse fast Fourier transform to radio transmission section 105. Radio transmission section 105 converts the transmission signal from digital to analog, up-converts and sends the signal via antenna 106 as a radio signal.

A radio signal received via antenna 106 is down-converted by radio reception section 107, converted from analog to digital and output to FFT section 108. FFT section 108 carries out fast Fourier transform on the received signal into received symbol pattern data and outputs this received symbol pattern to pattern conversion section 161 of demapping section 109.

Pattern conversion section 161 converts the received symbol pattern data to a pre-conversion symbol pattern and outputs to P/S conversion section 110. Table storage section 162 stores information on the correspondence between received symbol patterns and pre-conversion symbol patterns and outputs the correspondence information according to a reference by pattern conversion section 161.

P/S conversion section 110 converts the pre-conversion symbol pattern from parallel to serial, unites signals of the respective subcarriers into serial data and outputs to digital demodulation section 111. Digital demodulation section 111 demodulates serial data and outputs reception data.

Then, a transmission operation of the multi-carrier communication apparatus in the above-described configuration will be explained.

Transmission data is subjected to BPSK modulation by digital modulation section 101 and subjected to serial-parallel conversion by S/P conversion section 102. This data is output to pattern conversion section 151 as a pre-conversion symbol pattern.

A pre-conversion symbol pattern is converted by pattern conversion section 151 from a symbol pattern taking two types of values "+1" and "-1" to a symbol pattern taking three types of values "+1", "-1" and "0" and output to IFFT section 104 as a post-conversion symbol pattern. The conversion operation will be explained in further detail later.

A post-conversion symbol pattern is subjected to an inverse fast Fourier transform by IFFT section 104 and the signal after inverse fast Fourier transform is output to radio transmission section 105. The signal after inverse fast Fourier transform is converted by radio transmission section 105 from digital to analog, up-converted and sent via antenna 106 as a radio signal.

A received signal is subjected to a fast Fourier transform by FFT section 108 and then output to pattern conversion section 161 of demapping section 109. A post-conversion symbol pattern is converted by pattern conversion section 161 from a symbol pattern taking three types of values "+1", "-1" and "0" to a symbol pattern taking two types of values "+1" and "-1" and output to P/S conversion section 110 as a pre-conversion symbol pattern. The conversion operation will be explained in further detail later.

The demapped symbol data is converted by P/S conversion section 110 to serial data and output to digital demodulation section 111. Digital demodulation section 111 performs digital demodulation processing on the serial data to obtain reception data.

Then, an OFDM symbol conversion operation at pattern conversion section 151 will be explained.

Since each subcarrier on which each OFDM symbol is superimposed at IFFT section 104 has either a positive (+) or negative (-) value, it is known that there are 2^{N} combinations of IOFDM symbol patterns of OFDM signals made up of N subcarriers. Here, the positive (+) and negative (-) values are expressed as "+1" and "-1" respectively.

The present invention selects r out of N subcarriers, modulates the r subcarriers and sends amplitude [0] for the rest (N-r) subcarriers (sends nothing). The number of patterns for selecting r out of N subcarriers is calculated with _{N}Cᵣ.

r subcarriers give either positive or negative values. In this case, there are _{N}Cᵣ·2^{r} ways of expression for 1 OFDM symbol. While each subcarrier of a conventional multi-carrier communication has either a positive or negative value, each subcarrier of the multi-carrier communication of the present invention can also take "0", and therefore there can be cases where there is a large signal space, that is, _{N}Cᵣ·2^{r} > 2^{N}.

Therefore, it is possible to suppress peak power by selecting 2^{N} out of _{N}Cᵣ·2^{r} symbols in ascending order of peak power and mapping them from conventional OFDM symbols to OFDM symbols according to the system of the present invention.

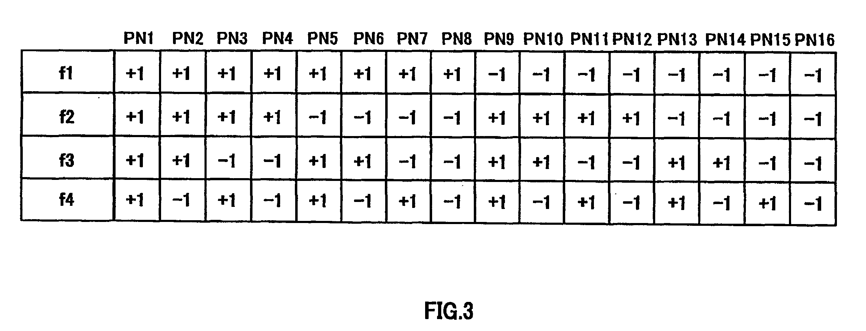

Then, an example of OFDM symbol conversion will be explained using FIG.3 to FIG.5.

Here, an example of converting an OFDM symbol made up of 4 subcarriers to a symbol pattern including amplitude "0" for one of the 4 subcarriers will be explained.

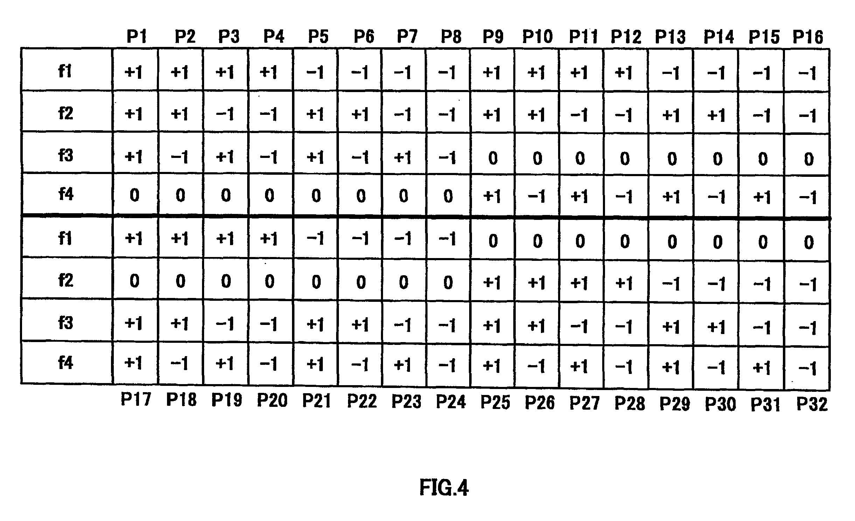

FIG.3 illustrates pre-conversion OFDM symbol patterns made up of 4 subcarriers in BPSK modulation. FIG.4 illustrates post-conversion OFDM symbol patterns whose one of 4 subcarriers in BPSK modulation is in a state of amplitude "0".

The conventional OFDM symbol patterns made up of 4 subcarriers are constructed of 16 combination as shown in FIG.3. On the other hand, as shown in FIG.4, there are 32 combinations of new OFDM symbol patterns whose one subcarrier is in a state of amplitude "0". Inclusion of a state of amplitude "0" makes it possible to create new OFDM symbol patterns with smaller peak power than conventional OFDM symbol patterns and new OFDM symbol patterns with greater peak power than conventional OFDM symbol patterns.

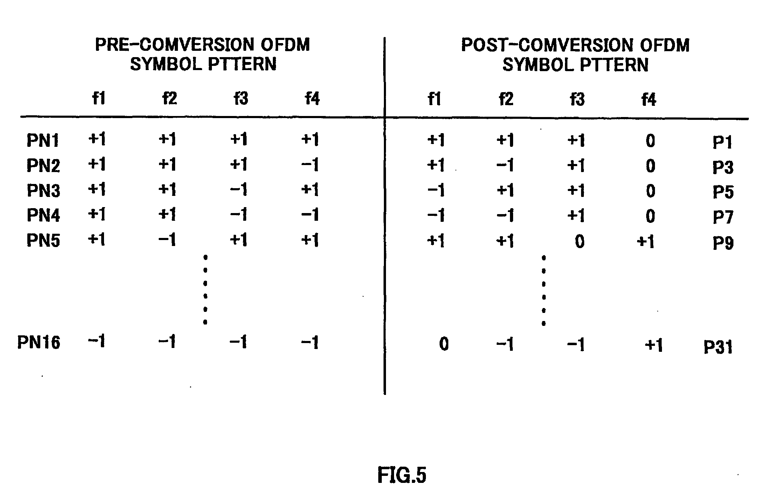

FIG.5 illustrates an example of a table of correspondence between pre-conversion symbol patterns and post-conversion symbol patterns in pattern conversion section 151. This example describes mapping where there is correspondence between PN1 and P1, between PN2 and P3, ···, between PN16 and P31 in both symbol patterns for the sake of clarity. In FIG.5, f1 to f4 indicate subcarrier frequencies.

In the correspondence table shown in FIG.5, OFDM symbol pattern PN1 (+1, +1, +1, +1) corresponds to OFDM symbol pattern P1 (+1, +1, +1, 0). OFDM symbol pattern PN2 (+1, +1, +1, -1) corresponds to OFDM symbol pattern P3 (+1, -1, +1, 0). OFDM symbol pattern PN3 (+1, +1, -1, +1) corresponds to OFDM symbol pattern P5 (-1, +1, -1, 0).

In this way, through the above-described mapping operation, pattern conversion section 151 converts OFDM symbol patterns from PN1, PN2, PN3, ···, PN16 to symbol patterns P1, P3, P5, ···, P31 which are symbol patterns with smaller peak power. These OFDM symbols with small peak power are output to IFFT section 104.

On the other hand, pattern conversion section 161 of demapping section 109 carries out processing opposite the processing by pattern conversion section 151 at mapping section 103. That is, pattern conversion section 161 converts from a 3-value symbol pattern with "+1", "-1" and "0" to a 2-value symbol pattern with "+1" and "-1" using the correspondence table shown in FIG.5.

The above-described mapping processing selects 16 patterns from among 32 new OFDM symbol patterns in ascending order of peak power and converts from 16 conventional OFDM symbol patterns, and can thereby further decrease peak power.

Thus, the multi-carrier communication apparatus of this embodiment adopts a configuration of a transmission apparatus in which each OFDM symbol (first OFDM symbol group) converted to parallel after digital modulation is output to the mapping section, where, of a plurality of subcarriers f1 to f4 on which the first OFDM symbol group is superimposed at the time of inverse fast Fourier transform, OFDM symbols superimposed on a predetermined number of subcarriers are set to "0", thereby the OFDM symbol space is expanded, as many OFDM symbols as symbols of the first OFDM symbol group are selected in ascending order of peak power, this selected OFDM symbol is associated with the first OFDM symbol group, the associated and selected OFDM symbols are output and these selected OFDM symbols are subjected to an inverse fast Fourier transform.

That is, setting some of subcarriers f1 to f4 to amplitude [0] increases the number of OFDM symbol patterns, that is, expands the signal space, and therefore if only a necessary number of symbol patterns are selected from among these symbol patterns in ascending order of peak power and used for transmission, symbol patterns with great peak power are not used with the result that it is possible to suppress peak voltages of signals with a simple apparatus configuration without deteriorating transmission characteristics nor increasing unnecessary out-of-band emissions nor increasing the size of the apparatus.

Furthermore, the reception apparatus is constructed in such a way that reception OFDM symbols from the transmission apparatus subjected to an inverse fast Fourier transform are subjected to a fast Fourier transform, each OFDM symbol obtained by this transform is collated by the demapping section with first pattern data equivalent to the selected OFDM symbol at the transmission apparatus, the matched OFDM symbol in this collation is associated with the second pattern data equivalent to the first OFDM symbol group at the above-described transmitting means, the OFDM symbol obtained by this association is converted to serial data and this serial data is demodulated. This makes it possible to correctly demodulate an OFDM symbol from the transmission apparatus.

Then, another example of mapping according to the present invention will be explained. Here, an operation of mapping a pre-conversion OFDM symbol made up of 5 subcarriers to a post-conversion OFDM symbol made up of 4 subcarriers will be explained.

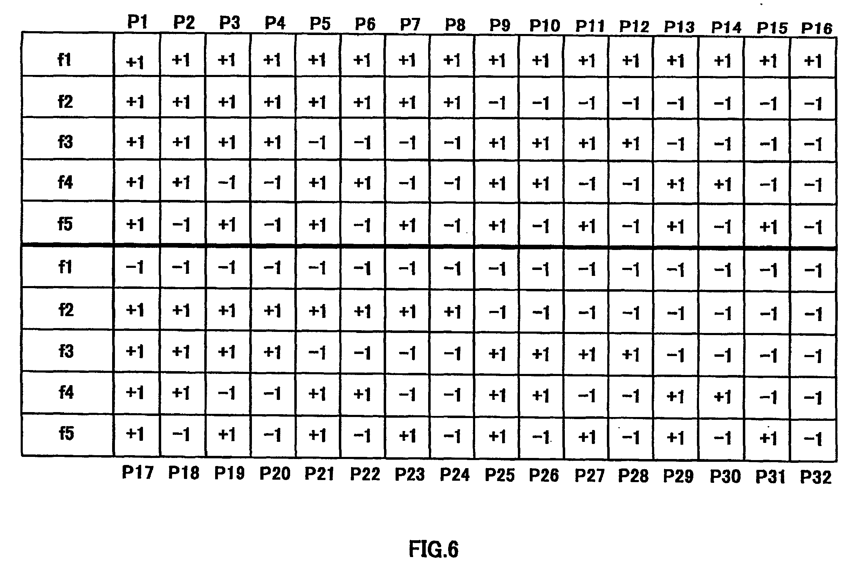

FIG.6 shows combinations of pre-conversion OFDM symbol patterns made up of 5 subcarriers. These pre-conversion OFDM symbol patterns consist of 32 combinations.

As described above, FIG.4 shows combinations of post-conversion OFDM symbols in a case where one out of four subcarriers can take an amplitude value of "0". These OFDM symbols consist of 32 combinations. Therefore, 32 pre-conversion OFDM patterns having 5 subcarriers can have a one-to-one correspondence with the 32 post-conversion OFDM patterns.

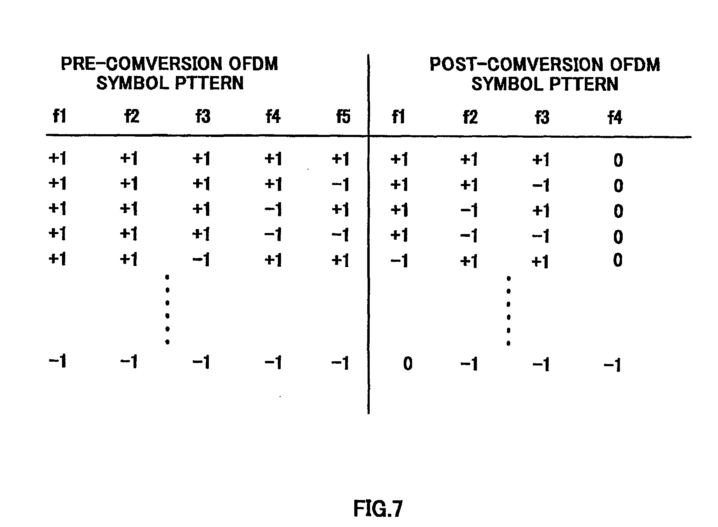

That is, as shown in FIG.7, pre-conversion OFDM symbol pattern (+1, +1, +1, +1, +1) corresponds to post-conversion OFDM symbol pattern (+1, +1, +1, 0). Pre-conversion OFDM symbol pattern (+1, +1, +1, +1, -1) corresponds to post-conversion OFDM symbol pattern (+1, +1, -1, 0). Pre-conversion OFDM symbol pattern (+1, +1, +1, -1, +1) corresponds to post-conversion OFDM symbol pattern (+1, -1, +1, 0). Likewise, 32 pre-conversion OFDM symbol patterns have a one-to-one correspondence with 32 post-conversion OFDM symbol patterns.

Pattern conversion section 151 converts OFDM symbol patterns according to the correspondence table shown in FIG.7 and converts a pre-conversion OFDM symbol made up of five subcarriers to a post-conversion OFDM symbol made up of four subcarriers.

On the other hand, when a post-conversion OFDM symbol made up of four subcarriers is demapped to a pre-conversion OFDM symbol made up of five subcarriers, pattern conversion section 161 of demapping section 109 converts symbol patterns according to the correspondence table shown in FIG.7 and converts a post-conversion OFDM symbol made up of four subcarriers to a pre-conversion OFDM symbol made up of five subcarriers.

According to such a mapping method, using symbol patterns including amplitude "0" for subcarriers suppresses peak power and at the same time increases the number of symbol patterns per 1 OFDM, that is, expands the signal space, and can thereby increase the amount of data per 1 OFDM and realize high-speed transmission.

Thus, according to the multi-carrier communication apparatus of this embodiment, some subcarriers are set to amplitude [0], the number of symbol data patterns increases, that is, the symbol data space expands, and therefore symbol patterns with large peak power are not used. As a result, it is possible to suppress peak voltages of signals with a simple apparatus configuration without deteriorating the transmission characteristics or increasing the size of the apparatus.

Furthermore, the multi-carrier communication apparatus of this embodiment carries out transmission with a first symbol string including a first symbol with at least one of the amplitudes of an in-phase component and quadrature component set to "0", and can thereby carry out multi-carrier communications with suppressed peak power.

Furthermore, the multi-carrier communication apparatus of this embodiment can easily collate the first and second symbol patterns and perform efficient demapping. This makes it possible to correctly demodulate symbol data of multi-carrier signals transmitted.

Furthermore, the multi-carrier communication apparatus of this embodiment can easily collate the first and second symbol patterns and perform efficient mapping.

### (Embodiment 2)

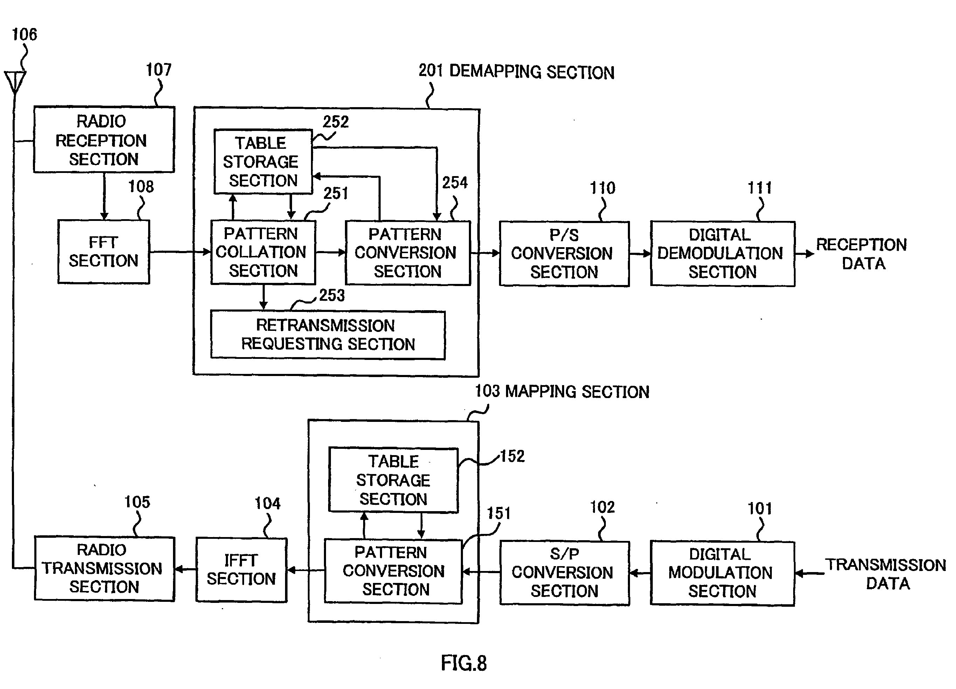

FIG.8 is a block diagram showing a configuration of a multi-carrier communication apparatus according to Embodiment 2 of the present invention. However, the same components as those in Embodiment 1 are assigned the same reference numerals and detailed explanations thereof are omitted.

According to this embodiment, demapping section 201 is constructed of pattern collation section 251 that collates symbol patterns, table storage section 252 that stores a symbol pattern correspondence table, retransmission requesting section 253 that requests retransmission when no matched symbol patterns are found and pattern conversion section 254 that converts symbol patterns, and this embodiment will describe a case where retransmission is requested when some error is detected in the symbol data.

An operation of the multi-carrier communication apparatus according to Embodiment 2 of the present invention will be explained using FIG.8 below.

A radio signal is input to radio reception section 107 via antenna 106, down-converted and analog/digital converted by radio reception section 107, subjected to a fast Fourier transform by FFT section 108 and output to pattern collation section 251 of the demapping section as reception OFDM symbol data.

Pattern collation section 251 checks whether the reception OFDM symbol data is a symbol pattern or not with reference to the correspondence table in table storage section 252 and outputs the reception OFDM symbol to pattern conversion section 254 when any matched symbol pattern is found and instructs retransmission requesting section 253 to request for retransmission of the symbol when no matched symbol patterns are found.

Retransmission requesting section 253 outputs a control signal requesting retransmission to digital modulation section 101 according to the instruction from pattern collation section 251. Furthermore, pattern conversion section 254 references the correspondence table and converts the reception OFDM symbol data to a pre-conversion OFDM symbol and outputs to P/S conversion section 110.

Error detection at the multi-carrier communication apparatus in FIG.8 will be explained.

A radio signal is input to radio reception section 107 through antenna 106, down-converted and analog/digital converted by radio reception section 107, subjected to a fast Fourier transform by FFT section 108 and output to pattern collation section 251 as received symbol data.

Pattern collation section 251 checks whether the received symbol data is a symbol pattern that corresponds to (is used in) table storage section 252 or not. Since this reception OFDM symbol uses symbol patterns including amplitude "0" for subcarriers, there are more patterns than normal OFDM symbol patterns and there are also some unmatched (unused) symbol patterns.

When there are no matched symbol patterns, it is decided that this symbol is not correct information and a symbol retransmission request is output to retransmission requesting section 253. When there is any matched symbol pattern, the reception OFDM symbol is output to pattern conversion section 254.

A retransmission request instruction is output by retransmission requesting section 253 to digital modulation section 101 as a retransmission request signal and sent to the apparatus on the transmitting side together with transmission data. A radio signal resent by a retransmission request is output to demapping section 201 as a reception OFDM symbol and it is rechecked whether the reception OFDM symbol is a symbol pattern supported in table storage section 252 or not.

The reception OFDM symbol output to pattern conversion section 254 is converted to serial data by P/S conversion section 110 and demodulated to reception data by digital demodulation section 111.

Thus, the multi-carrier communication apparatus of this embodiment can receive symbol data free of errors through retransmission even if errors occur in the received symbol data during transmission.

### (Embodiment 3)

This embodiment will describe a case where error correction is performed when a reception OFDM symbol contains errors.

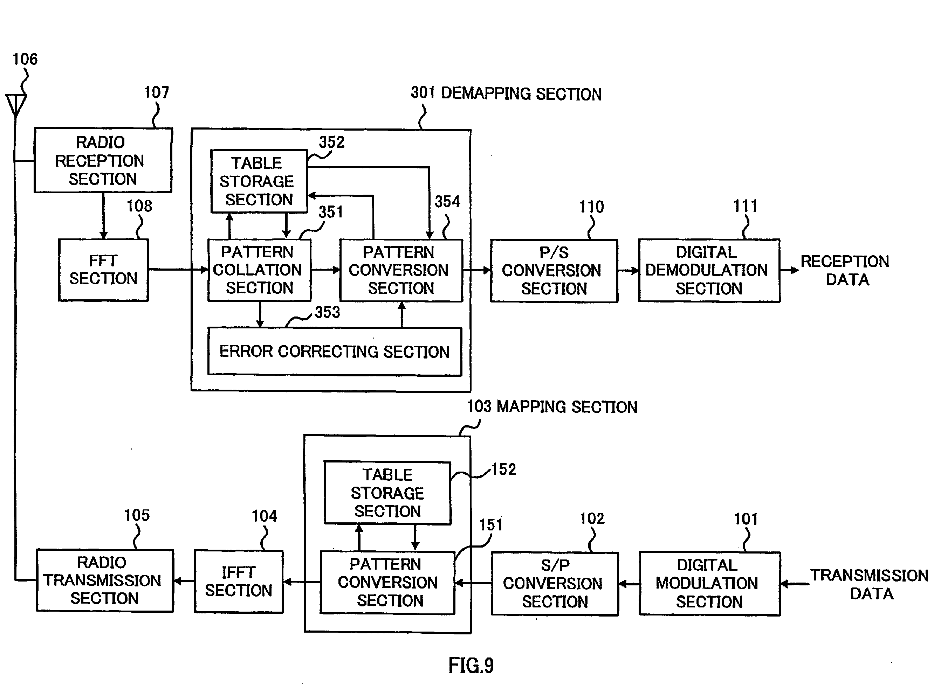

FIG.9 is a block diagram showing a configuration of a multi-carrier communication apparatus according to Embodiment 3 of the present invention. However, the same components as those in Embodiment 1 are assigned the same reference numerals and detailed explanations thereof are omitted.

In the configuration shown in FIG.9, demapping section 301 is constructed of pattern collation section 351 that checks symbol patterns with reference to a correspondence table, table storage section 352 that stores a symbol pattern correspondence table, error correcting section 353 that corrects erroneous symbol patterns and pattern conversion section 354 that converts symbol patterns according to the correspondence table.

Pattern collation section 351 checks whether a reception OFDM symbol is a symbol pattern supported in the correspondence table stored in table storage section 352 or not and outputs the reception OFDM symbol to pattern conversion section 354 when any matched symbol pattern is found and error correcting section 353 corrects errors of the symbol when no matched symbol patterns are found. Error correcting section 353 performs error correction by, for example, comparing an erroneous OFDM symbol pattern and a symbol pattern in the correspondence table stored in table storage section 352, selects the most resembling symbol pattern as the symbol pattern after error correction.

Pattern conversion section 354 converts reception OFDM symbol data to a pre-conversion OFDM symbol and outputs to P/S conversion section 110.

Error correction in a multi-carrier communication will be explained using FIG.9.

A radio signal is input to radio reception section 107 through antenna 106, down-converted and analog/digital converted by radio reception section 107, subjected to a fast Fourier transform by FFT section 108 and output to pattern collation section 351 as received symbol data.

Pattern collation section 351 checks whether the received symbol data is a symbol pattern supported in table storage section 352 or not. When the symbol pattern is not supported, it is decided that this symbol is not a correct symbol and output to error correcting section 353. Error correcting section 353 selects a symbol pattern resembling the symbol pattern input as an error and outputs to pattern conversion section 354. When the collation result shows that the symbol pattern is supported, the reception OFDM symbol is output to pattern conversion section 354.

The reception OFDM symbol output to pattern conversion section 354 is converted to serial data by P/S conversion section 110 and demodulated to reception data by digital demodulation section 111.

Thus, the multi-carrier communication apparatus of this embodiment can receive symbol data free of errors by carrying out error correction even if errors occur in the received symbol data during transmission, etc.

### (Embodiment 4)

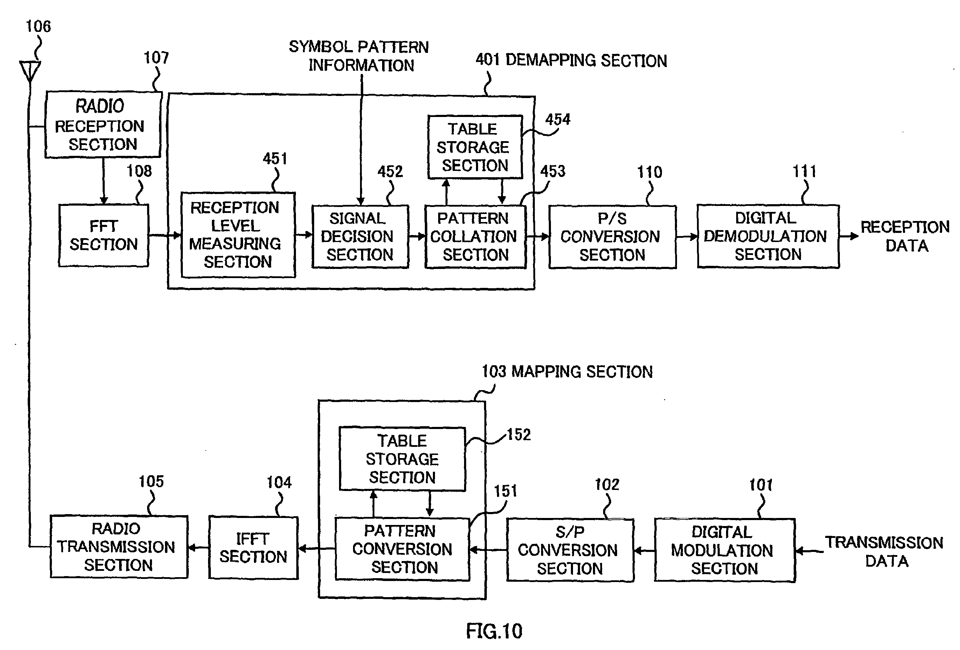

FIG.10 is a block diagram showing a configuration of a multi-carrier communication apparatus according to Embodiment 4 of the present invention. However, the same components as those in Embodiment 1 are assigned the same reference numerals and detailed explanations thereof are omitted.

In FIG.10, demapping section 401 is constructed of reception level measuring section 451, signal decision section 452, pattern conversion section 453 and table storage section 454.

Reception level measuring section 451 measures the reception level of each subcarrier of the reception OFDM symbol output from FFT section 108 and outputs the result to signal decision section 452.

Signal decision section 452 performs hard decision on the symbol according to the reception level of each subcarrier and outputs this hard decision result to pattern conversion section 453. Pattern conversion section 453 performs pattern conversion on the symbol pattern composed according to the hard decision result with reference to the correspondence table stored in table storage section 454. Pattern conversion section 453 outputs the OFDM symbol pattern subjected to pattern conversion to P/S conversion section 110.

Then, an operation of the multi-carrier communication apparatus according to Embodiment 4 will be explained.

A radio signal sent from an apparatus on the transmitting side is down-converted by radio reception section 107, converted from analog to digital, subjected to a fast Fourier transform by FFT section 108 and output to reception level measuring section 451 as received symbol data.

Reception level measuring section 451 measures the reception level of the symbol and outputs the result to signal decision section 452. Signal decision section 452 performs hard decision on the received symbol data by comparing the reception level with a threshold and decides the symbol pattern. This symbol pattern is output to pattern conversion section 453 as post-conversion symbol data. This hard decision will be described later.

The post-conversion symbol data is converted by pattern conversion section 453 to pre-conversion symbol data according to the correspondence table stored in table storage section 454. On the other hand, the pre-conversion symbol data is converted to parallel data by P/S conversion section 110 and demodulated to reception data by digital demodulation section 111.

Next, an example of symbol pattern decision operation by signal decision section 452 will be explained. Here, a case will be explained where a decision is made on a symbol pattern having two values "+1" and "-1" converted to a symbol pattern having three values "+1", "-1" and "0" and at the same time a symbol pattern is (+1, -1, 0, -1).

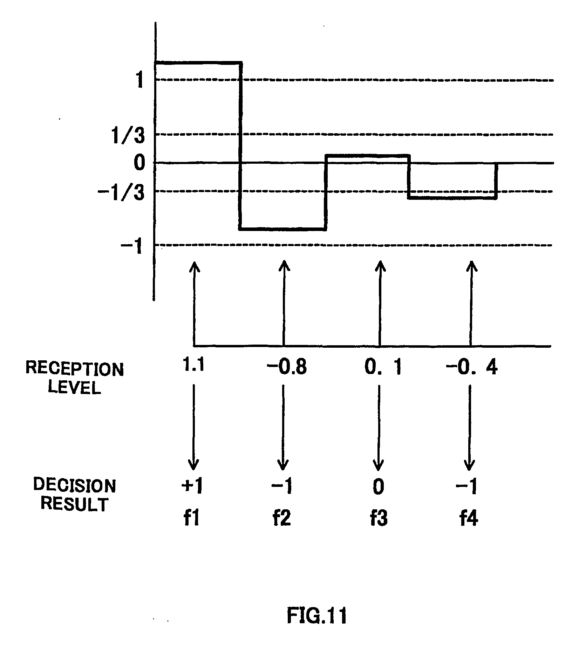

Signal decision section 452 decides a 3-value symbol pattern according to the reception level, and therefore decides three values using two thresholds of "1/3" and "-1/3" as shown in FIG.11. Thus, when the reception level is greater than threshold "1/3", the symbol pattern is decided to be "+1", when the reception level is smaller than threshold "-1/3", the symbol pattern is decided to be "-1" and when the reception level is smaller than threshold "1/3" and greater than "-1/3", the symbol pattern is decided to be "0"

That is, the reception level of the symbol pattern of subcarrier f1 is "1.1" which is greater than threshold "1/3", and therefore the symbol pattern is decided to be "+1". The reception level of the symbol pattern of subcarrier f2 is "-0.8" which is smaller than threshold "-1/3", and therefore the symbol pattern is decided to be "-1". The reception level of the symbol pattern of subcarrier f3 is "0.1" which is smaller than threshold "1/3" and greater than threshold "-1/3" and therefore the symbol pattern is decided to be "0". The reception level of the symbol pattern of subcarrier f4 is "-0.4" which is smaller than threshold "-1/3", and therefore the symbol pattern is decided to be "-1". Symbol patterns are decided in this way.

Thus, performing hard decision on symbols of a symbol pattern based on the reception level with two thresholds makes it possible to decide a digital signal with three values. This allows accurate decision of a new symbol pattern with three values.

Thus, the multi-carrier communication apparatus of this embodiment allows accurate decision of a symbol pattern including symbols with amplitude "0".

Then, another example of symbol pattern decision operation by signal decision section 452 will be explained. Here, a case will be explained where a decision is made on a symbol pattern with two values "+1" and "-1" converted to a symbol pattern with three values of "+1", "-1" and "0" and at the same time a symbol pattern is (+1, -1, 0, -1).

In this decision, an apparatus on the transmitting side notifies symbol pattern information on the number of amplitude "0"s included in a symbol pattern. Signal decision section 452 makes a first decision assigning a value "0" to a symbol whose reception level is close to a value "0" according to this symbol pattern information first. Then, signal decision section 452 only decides the polarity of the reception level for the remaining symbols and makes a second decision assigning values "+1" and "-1". It is also possible to predetermine the number of amplitude "0"s included in the symbol pattern making notification of symbol pattern information unnecessary.

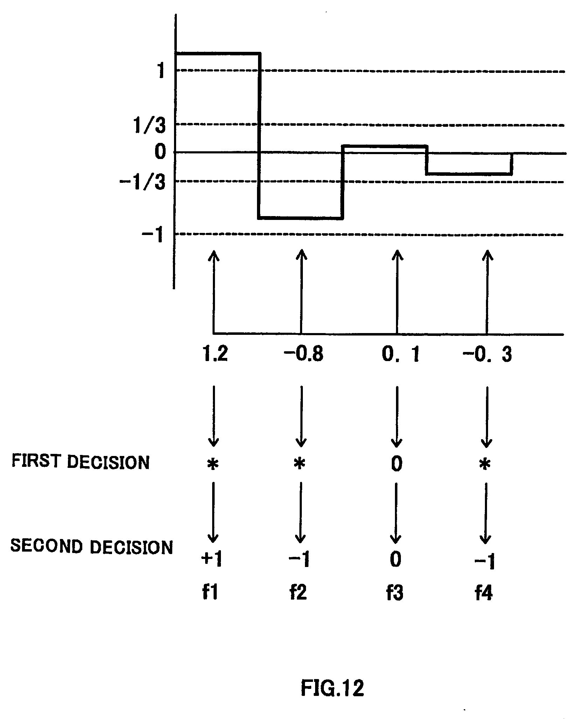

More specifically, as shown in FIG.12, when a symbol pattern of one of four subcarriers composing symbol patterns takes a value "0", that is, when the apparatus on the transmitting side sends a control signal indicating that there is one symbol taking the "0" value as symbol pattern information, f3 whose absolute value of the reception level is the smallest is decided to be "0".

Since there is only one symbol pattern of a value "0", it is possible to decide the remaining subcarrier symbols based on the polarity of the reception level. Therefore, it is possible to decide f1 as "+1", f2 as "-1" and f4 as "-1". Thus, a symbol pattern is decided by making a two-stage decision, that is, making a decision on the amplitude for known "0" symbols and making a polarity decision for other symbols. An amplitude decision here refers to a decision on a symbol absolute value or polarity and refers to a decision on "+1", "0" and "-1" in this case. Furthermore, a polarity decision simply refers to an act of deciding polarity.

Likewise, when m out of n subcarrier symbols take values "0"s, the absolute values of reception levels are compared and M symbols in ascending order of those values are decided to be "0" and the remaining (n-m) symbols are decided to be "+1" or "-1" depending on the polarity of the reception level. Symbol patterns are decided in this way.

As shown above, the multi-carrier communication apparatus of this embodiment can accurately decide symbol patterns including symbols of amplitude "0" by a first decision and only needs to make a polarity decision to decide other symbols, making it possible to make a more accurate decision on symbol patterns.

### (Embodiment 5)

This embodiment will describe a case where a plurality of OFDM symbol patterns are associated with conventional OFDM symbol patterns.

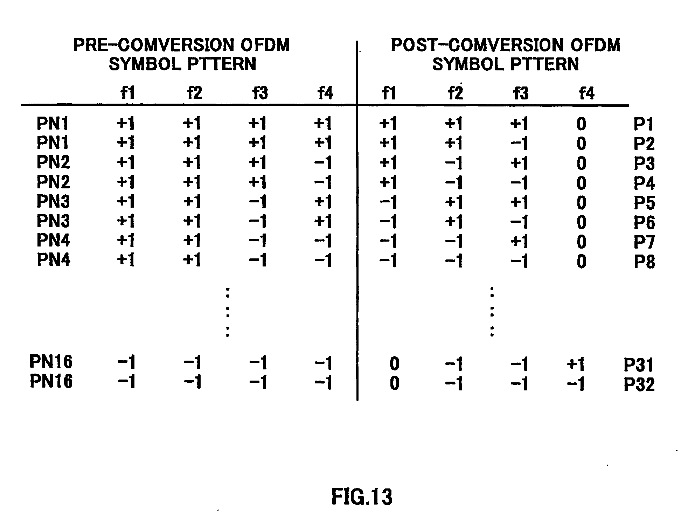

FIG.13 illustrates an example of a table of correspondence between pre-conversion symbol patterns and post-conversion symbol patterns at pattern conversion section 151 in FIG.2. This example describes mapping where there is correspondence between PN1 and P1 or P2, between PN2 and P3 or P4, ···, between PN16 and P31 or P32 in both symbol patterns for the sake of clarity. In FIG.13, f1 to f4 indicate subcarrier frequencies.

In the correspondence table shown in FIG.13, OFDM symbol pattern PN1 (+1, +1, +1, +1) corresponds to OFDM symbol pattern P1 (+1, +1, +1, 0) or P2 (+1, +1, -1, 0). OFDM symbol pattern PN2 (+1, +1, +1, -1) corresponds to OFDM symbol pattern P3 (+1, -1, +1, 0) or P4 (+1, -1, -1, 0). OFDM symbol pattern PN3 (+1, +1, -1, +1) corresponds to OFDM symbol pattern P5 (-1, +1, +1, 0) or P6 (-1, +1, -1, 0).

In this way, through the above-described mapping operation, pattern conversion section 151 converts OFDM symbol patterns from PN1, PN2, PN3, ···, PN16 to symbol patterns P1, P3, P5, P7, P9, P11,···, P31 or P2, P4, P6, P8, P10, P12, ···, P32. These OFDM symbols are output to IFFT section 104.

On the other hand, pattern conversion section 161 of demapping section 109 in FIG.2 carries out processing opposite the processing by pattern conversion section 151 at mapping section 103. That is, pattern conversion section 161 converts from a symbol pattern with three values "+1", "-1" and "0" to a symbol pattern with 2 values "+1" and "-1" using the correspondence table shown in FIG.13.

For example, when subcarrier f3 of symbol pattern P1 (+1, +1, +1, 0) converted from symbol pattern PN1 (+1, +1, +1, +1) is changed to P2 (+1, +1, -1, 0) due to influence of fading, etc., symbol P2 (+1, +1, -1, 0) is converted to symbol pattern PN1 (1, +1, +1, +1) and can be received as a correct symbol pattern.

Thus, when errors occur in the transmitted symbol due to influence such as fading, the multi-carrier communication apparatus of this embodiment can receive a correct symbol by receiving it as one of a plurality of symbols corresponding to the transmitted data.

A plurality of OFDM symbol patterns corresponding to conventional OFDM symbol patterns can also be associated with patterns whose Euclidean distance between symbols is smaller than that between other OFDM symbol patterns.

In this case, by associating symbol patterns whose Euclidean distance is smaller with one conventional OFDM pattern, it is possible to distinguish from other symbols even if symbols change due to influences of the path such as fading.

### (Embodiment 6)

This embodiment will describe a case where a conventional OFDM symbol pattern is associated with a plurality of OFDM symbol patterns and a plurality of corresponding OFDM symbol patterns is transmitted alternately.

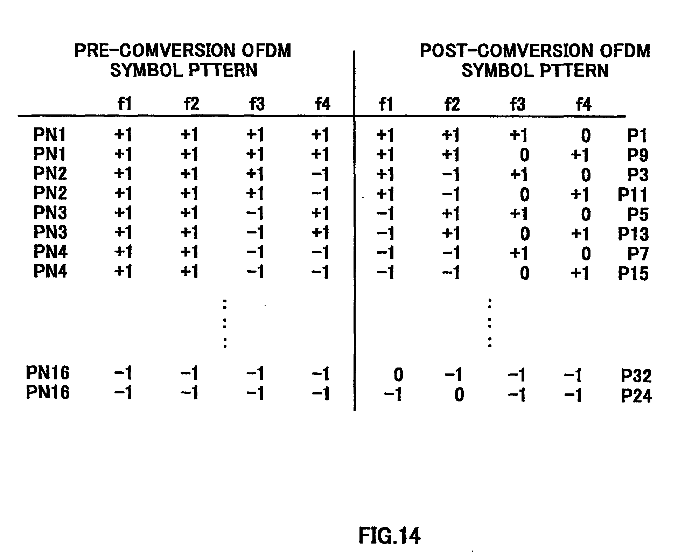

FIG.14 illustrates an example of a symbol pattern correspondence table before and after conversion by pattern conversion section 151 in FIG.2. This example describes mapping where there is correspondence between PN1 and P1 or P9, between PN2 and P3 or P11, ···, between PN16 and P31 or P24 in both symbol patterns for the sake of clarity. In FIG.14, f1 to f4 indicate subcarrier frequencies.

In the correspondence table shown in FIG.14, OFDM symbol pattern PN1 (+1, +1, +1, +1) corresponds to OFDM symbol pattern P1 (+1, +1, +1, 0) or P9 (+1, +1, 0, +1). OFDM symbol pattern PN2 (+1, +1, +1, -1) corresponds to OFDM symbol pattern P3 (+1, -1, +1, 0) or P11 (+1, -1, 0, +1). OFDM symbol pattern PN3 (+1, +1, -1, +1) corresponds to OFDM symbol pattern P5 (-1, +1, -1, 0) or P13 (-1, +1, 0, +1).

In this way, through the above-described mapping operation, pattern conversion section 151 converts OFDM symbol patterns from PN1, PN2, PN3, ···, PN16 to symbol patterns P1, P3, P5, P7, ···, P32 and through the next symbol conversion operation, pattern conversion section 151 converts OFDM symbol patterns from PN1, PN2, PN3, ···, PN16 to symbol patterns P9, P11, P13, P15, ···, P24. Then, pattern conversion section 151 outputs this OFDM symbol to IFFT section 104.

On the other hand, pattern conversion section 161 of demapping section 109 in FIG.2 carries out processing opposite the processing by pattern conversion section 151 at mapping section 103. That is, pattern conversion section 161 converts from a symbol pattern wit 3 values "+1", "-1" and "0" to a symbol pattern with 2 values "+1" and "-1" using the correspondence table shown in FIG.14.

Thus, 16 conventional OFDM symbol patterns are converted to 16 patterns out of 32 new OFDM symbol patterns and sent and the received symbols are converted from the 32 OFDM symbol patterns to 16 conventional OFDM symbol patterns. First, the corresponding symbol patterns are sent from among P1, P3, P5, P7, ···, P32 and then the corresponding symbol patterns are sent from among P9, P11, P13, P15, ···, P24 and then the corresponding symbol patterns are sent from among P1, P3, P5, P7, ···, P32.

Thus, the multi-carrier communication apparatus of this embodiment sends symbols by alternately associating the symbols with different positions of subcarriers having amplitude "0" and the positions of subcarriers having "0" change among patterns to be sent consecutively, and therefore it is possible to reduce interference among symbols.

By the way, the method of selecting symbol patterns to be sent out of a plurality of symbol patterns corresponding to the conventional OFDM symbol patterns is not limited to the above-described method.

For example, it is also possible to select symbol patterns from among a plurality of symbol patterns corresponding to the conventional OFDM symbol patterns using random numbers and send those symbol patterns.

### (Embodiment 7)

This embodiment will describe a case where a plurality of subcarriers with amplitude "0" is combined and used as a single pattern.

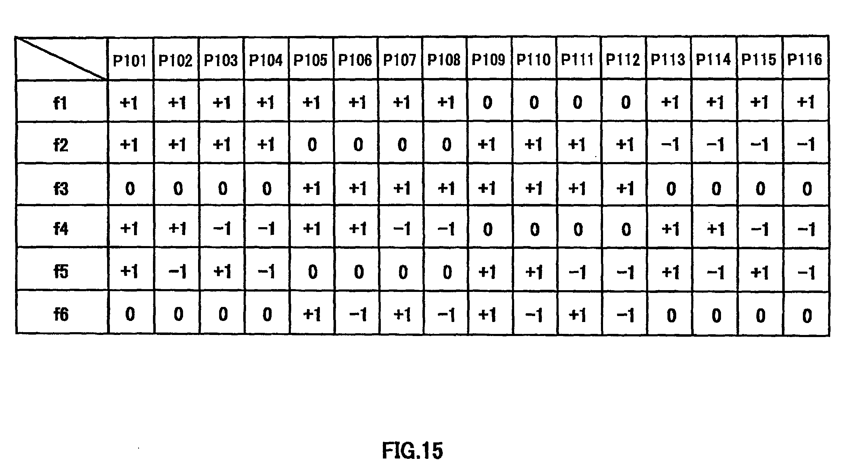

FIG.15 illustrates new OFDM symbol patterns.

This OFDM symbol pattern made up of 6 subcarriers consists of 64 symbol patterns and FIG.15 shows 16 out of 64 symbol patterns. This symbol pattern includes a set of two subcarriers having amplitude "0".

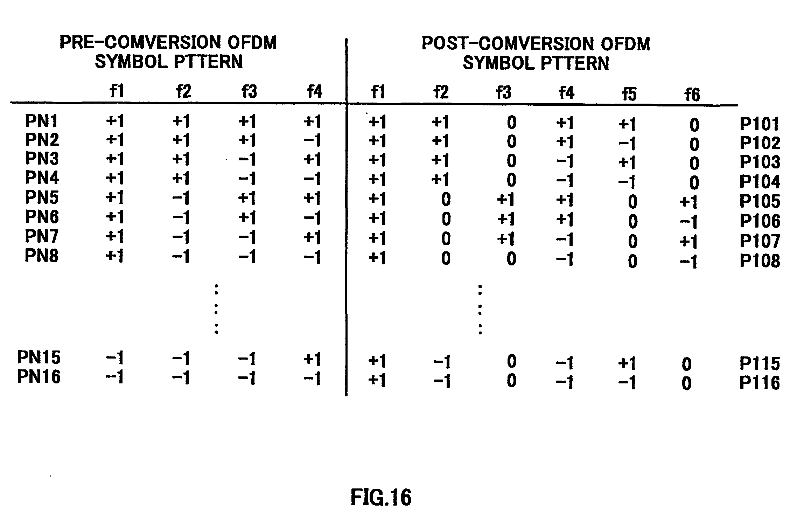

FIG.16 illustrates an example of a table of correspondence before and after conversion by pattern conversion section 151. This example describes mapping where there is correspondence between PN1 and P101, between PN2 and P102, ···, between PN16 and P116 in both symbol patterns for the sake of clarity. In FIG.16, f1 to f6 indicate subcarrier frequencies.

In the correspondence table shown in FIG.16, OFDM symbol pattern PN1 (+1, +1, +1, +1) corresponds to OFDM symbol pattern P101 (+1, +1, 0, +1, +1, 0). OFDM symbol pattern PN2 (+1, +1, +1, -1) corresponds to OFDM symbol pattern P102 (+1, +1, 0, +1, -1, 0). OFDM symbol pattern PN3 (+1, +1, -1, +1) corresponds to OFDM symbol pattern P103 (+1, +1, 0, -1, +1, 0).

These OFDM symbol patterns use a set of two subcarriers with amplitude "0". For example, there can be a symbol pattern with subcarriers f1 and f4 having amplitude value "0", a symbol pattern with subcarriers f2 and f5 having amplitude value "0" and a symbol pattern with subcarriers f3 and f6 having amplitude value "0".

In this way, through the above-described mapping operation, pattern conversion section 151 converts OFDM symbol patterns from PN1, PN2, PN3, ···, PN16 to symbol patterns P101, P102, P103,···, P116. Then, pattern conversion section 151 outputs this OFDM symbol to IFFT section 104.

On the other hand, pattern conversion section 161 of demapping section 109 carries out processing opposite the processing by pattern conversion section 151 at mapping section 103. That is, pattern conversion section 161 converts from a symbol pattern with 3 values "+1", "-1" and "0" to a symbol pattern with 2 values "+1" and "-1" using the correspondence table shown in FIG.16.

Thus, the multi-carrier communication apparatus of this embodiment converts 16 conventional OFDM symbol patterns to 16 new OFDM symbol patterns, send these symbol patterns and converts the received symbols from the 16 OFDM symbol patterns to 16 conventional OFDM symbol patterns and sends any one of symbol patterns P101, P102, P103, P104,···, P116.

For example, when symbol pattern P101 (+1, +1, 0, +1, +1, 0) is sent, some subcarrier values are changed due to influences of the path and these are received on the receiving side with a symbol pattern of (+1, +1, 0, 0, +1, 0), combinations of subcarriers whose amplitude is decided to be "0" are compared.

The combination between subcarriers f1 and f4 takes values "+1" and "0", the combination between subcarriers f3 and f6 takes values "0" and "0", and the multi-carrier communication apparatus decides the symbol pattern with the combination of subcarriers f3 and f6 having amplitude "0" as the most appropriate symbol pattern received.

Thus, the multi-carrier communication apparatus of this embodiment combines a plurality of subcarriers with amplitude "0" and use them as a single pattern and even if the signal is changed under the influence from the path such as fading, the multi-carrier communication apparatus can carry out communications with few errors by deciding from the positions of a plurality of subcarriers with amplitude "0".

Furthermore, the reception apparatus is constructed in such as way that a reception OFDM symbol subjected to an inverse fast Fourier transform from the transmission apparatus is subjected to a fast Fourier transform, each transformed OFDM symbol obtained is checked by the demapping section against first pattern data equivalent to the selected OFDM symbol at the transmission apparatus, the matched OFDM symbol as a result of this check is associated with second pattern data equal to the first OFDM symbol group in the above-described transmitting means, this associated OFDM symbol is converted to serial data and this serial data is demodulated. This makes it possible to correctly demodulate an OFDM symbol from the transmission apparatus.

### (Embodiment 8)

This embodiment will describe a case where a Euclidean distance between patterns is widened according to the positions of subcarriers with amplitude "0".

A Euclidean distance is used as a standard to decide symbol patterns in a multi-carrier communication. The Euclidean distance between a symbol of a subcarrier with amplitude "+1" and a symbol with amplitude "-1" is 2.

On the other hand, the Euclidean distance between a symbol with amplitude "0" and a symbol with amplitude "+1" is 1, while the Euclidean distance between a symbol with amplitude "0" and a symbol with amplitude "-1" is 1, and therefore using a symbol pattern including amplitude "0" decreases the Euclidean distance between symbols, making a distinction between signals difficult and worsening the transmission characteristic.

Thus, the transmission characteristic is improved using only symbol patterns whose Euclidean distance is at least 2.

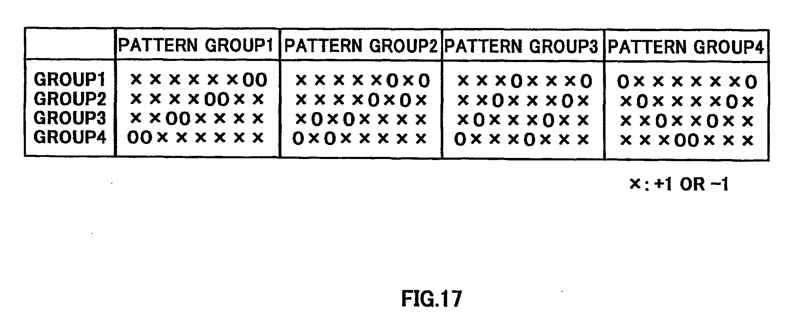

FIG.17 illustrates an example where two symbols with amplitude "0" are placed on 8 subcarriers according to Embodiment 8 of the present invention.

"0" in FIG.17 denotes amplitude "0" and "x" denotes amplitude "+1" or "-1".

Group 1 in pattern group 1 is a symbol pattern with amplitude "0" placed on subcarriers f7 and f8.

For a symbol pattern that belongs to group 1, there is a difference between amplitude "+1" and amplitude "-1" on at least one subcarrier of symbols of f1, f2, f3, f4, f5 and f6, and therefore symbol patterns that belong to group 1 have mutual Euclidean distances of at least 2.

A symbol pattern that belongs to group 2 is a symbol pattern with symbols with amplitude "0" placed on subcarriers f5 and f6.

For a symbol pattern that belongs to group 2, there is a difference between amplitude "+1" and amplitude "-1" on at least one subcarrier of symbols of f1, f2, f3, f4, f7 and f8, and therefore symbol patterns that belong to group 2 have mutual Euclidean distances of at least 2.

Since a symbol pattern that belongs to group 1 differs from a symbol pattern that belongs to group 2 in subcarriers on which two symbols of amplitude "0" are placed, symbol patterns that belong to different groups have a mutual Euclidean distance of at least 2.

Then, an example of conversion of symbol patterns will be explained.

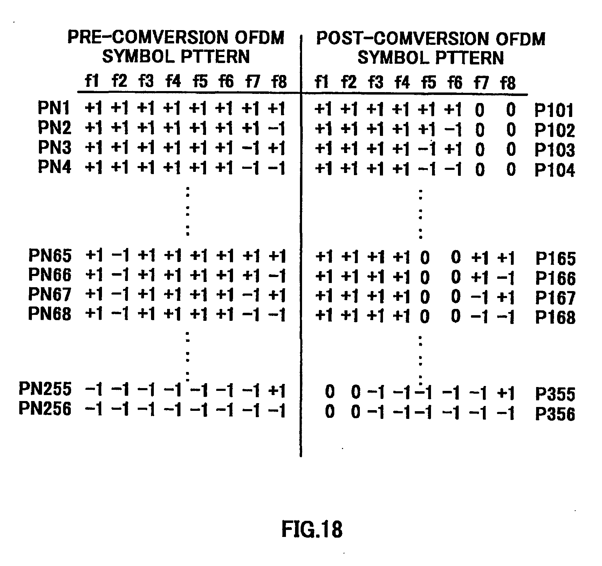

FIG.18 illustrates an example of a table of correspondence between symbol patterns before and after conversion by the pattern conversion section 151 according to Embodiment 8 of the present invention.

This example describes mapping where there is correspondence between PN1 and P101, between PN2 and P102, ···, between PN256 and P356 in both symbol patterns for the sake of clarity. In FIG.18, f1 to f8 indicate subcarrier frequencies.

In the correspondence table shown in FIG.18, OFDM symbol pattern PN1 (+1, +1, +1, +1, +1, +1, +1, +1) corresponds to OFDM symbol pattern P101 (+1, +1, +1, +1, +1, +1, 0, 0). OFDM symbol pattern PN2 (+1, +1, +1, +1, +1, +1, +1, -1) corresponds to OFDM symbol pattern P102 (+1, +1, +1, +1, +1, -1, 0, 0). OFDM symbol pattern PN3 (+1, +1, +1, +1, +1, +1, -1, +1) corresponds to OFDM symbol pattern P103 (+1, +1, +1, +1, -1, +1, 0, 0).

In this way, through the above-described mapping operation, pattern conversion section 151 converts OFDM symbol patterns from PN1, PN2, PN3, ···, PN256 to symbol patterns P101, P102, P103, ···, P356. These OFDM symbols are output to IFFT section 104.

On the other hand, pattern conversion section 161 of demapping section 109 carries out processing opposite the processing by pattern conversion section 151 at mapping section 103. That is, pattern conversion section 161 converts from a symbol pattern with 3 values "+1", "-1" and "0" to a symbol pattern with 2 values "+1" and "-1" using the correspondence table shown in FIG.18.

Thus , the multi-carrier communication apparatus of this embodiment converts 256 conventional OFDM symbol patterns to 256 new OFDM symbol patterns, sends these OFDM symbol patterns and converts the received 256 OFDM symbol patterns to 256 conventional OFDM symbol patterns and sends any one of symbol patterns P101, P102, P103, P104,···, P356.

Thus, the multi-carrier communication apparatus of this embodiment associates symbol patterns having mutual Euclidean distances of a predetermined value or greater with different conventional data patterns, and can thereby distinguish a symbol from other symbols even if symbols change due to influences of the path such as fading.

### (Embodiment 9)

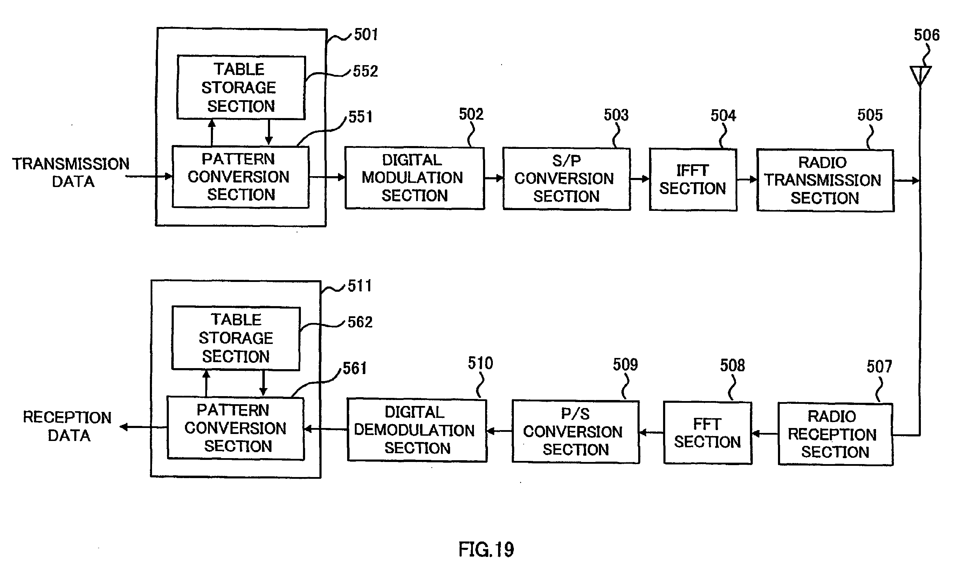

FIG.19 is a block diagram showing a configuration of a multi-carrier communication apparatus according to Embodiment 9 of the present invention.

The multi-carrier communication apparatus according to Embodiment 9 of the present invention is constructed of mapping section 501, digital modulation section 502, S/P conversion section 503, IFFT section 504, radio transmission section 505, antenna 506, radio reception section 507, FFT section 508, P/S conversion section 509, digital demodulation section 510 and demapping section 511.

Furthermore, mapping section 501 is constructed of pattern conversion section 551 and table storage section 552.

Furthermore, demapping section 511 is constructed of pattern conversion section 561 and table storage section 562.

In FIG.19, pattern conversion section 551 converts transmission data expressed with two values to transmission data expressed with three values and outputs this transmission data to digital modulation section 502. Table storage section 552 stores information on the correspondence between patterns of transmission data expressed with two values and patterns of transmission data expressed with three values and outputs the correspondence information according to a reference by pattern conversion section 551.

Digital modulation section 502 digital-modulates the transmission data output from mapping section 501 and outputs the modulated transmission symbol string to S/P conversion section 503. S/P conversion section 503 converts transmission symbols from serial to parallel and assigns the transmission symbols to their respective subcarriers and outputs to IFFT section 504.

IFFT section 504 performs an inverse fast Fourier transform on the transmission symbol and outputs the transmission signal after the inverse fast Fourier transform to radio transmission section 505. Radio transmission section 505 converts the transmission signal from digital to analog, up-converts and sends it via antenna 506 as a radio signal.

A radio signal received via antenna 506 is down-converted and converted from analog to digital by radio reception section 107 and output to FFT section 508. FFT section 508 carries out a fast Fourier transform on the received signal and outputs the received symbol obtained to P/S conversion section 509.

P/S conversion section 509 converts the received symbol from parallel to serial, unites signals of respective subcarriers into a received symbol string and outputs to digital demodulation section 510. Digital demodulation section 510 demodulates the received symbol string and outputs the reception data obtained to pattern conversion section 561.

Pattern conversion section 561 converts reception data expressed with three values to reception data expressed with two values and outputs. Table storage section 562 stores information on the correspondence between the reception data expressed with two values and reception data expressed with three values and outputs the correspondence information according to a reference by pattern conversion section 561.

Then, a transmission operation of the multi-carrier communication apparatus in the above-described configuration will be explained.

Pattern conversion section 551 converts the transmission data from transmission data taking two types of values of "1" and "0" to transmission data taking three types of values of "1", "-1" and "0" based on the correspondence information stored in table storage section 552 and outputs the transmission data expressed with three values to digital modulation section 502. This conversion operation will be explained in further detail later.

The transmission data output from pattern conversion section 551 is subjected to BPSK modulation by digital conversion section 502 and converted from serial to parallel by S/P conversion section 503. This data is superimposed on a plurality of subcarriers and output to IFFT section 504 as transmission symbols.

IFFT section 504 performs an inverse fast Fourier transform on the transmission symbols and outputs the transmission signal after the inverse fast Fourier transform to radio transmission section 505. Radio transmission section 505 converts the signal after the inverse fast Fourier transform from digital to analog, up-converts and sends it via antenna 506 as a radio signal.

A radio signal received via antenna 506 is down-converted by radio reception section 507, converted from analog to digital and output to FFT section 508.

FFT section 508 carries out a fast Fourier transform on the received signal into a received symbol, P/S conversion section 509 converts this to a received symbol string and outputs to digital modulation section 510.

The received symbol string is demodulated by digital modulation section 510 and the reception data obtained is output to pattern conversion section 561.

Pattern conversion section 561 converts the reception data from a pattern taking three types of values "+1", "-1" and "0" to a pattern taking two types of values "1" and "0" and outputs as reception data expressed with two values. The conversion operation will be explained in further detail later.

The transmission data conversion operation by pattern conversion section 551 will be explained below.

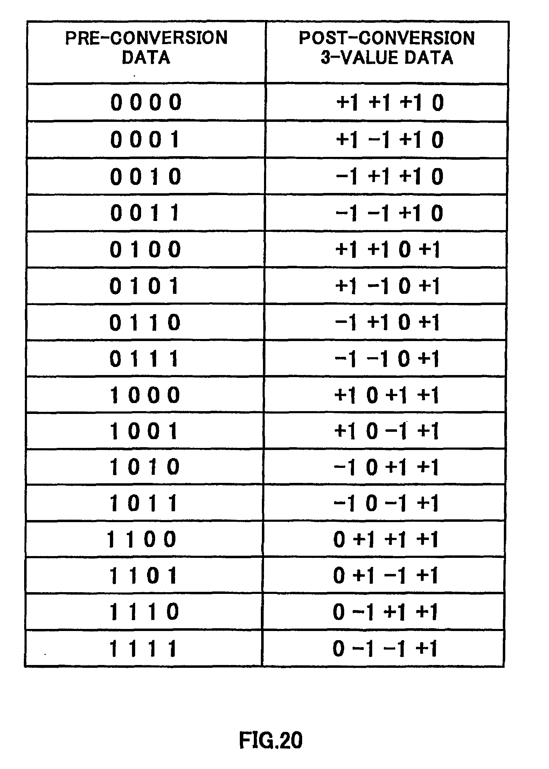

FIG.20 illustrates an example of converting data expressed with two values to data expressed with three values.

In FIG.20, the pre-conversion data is 4-bit data expressed with two values of "0" and "1" and post-conversion 3-value data is data expressed with three values of "+1", "0" and "-1".

When 4-bit data "0, 0, 0, 0" is input, pattern conversion section 551 converts the 4-bit data to "+1, +1, +1, 0" based on the correspondence information stored in table storage section 552, for example, the correspondence information shown in FIG.20 and outputs to digital modulation section 502.

Likewise, pattern conversion section 551 converts the 4-bit data "0, 0, 0, 1" input to "+1, -1, +1, 0" based on the correspondence information stored in table storage section 552 and outputs to digital modulation section 502.

Digital modulation section 502 modulates discrete data to a signal whose amplitude takes continuous values. For example, when "+1" is input, digital modulation section 502 outputs a sine waveform with a predetermined frequency, predetermined amplitude and predetermined phase, and when "-1" is input, digital modulation section 502 outputs a sine waveform with a predetermined frequency and predetermined amplitude with a cycle 180 degrees shifted from a predetermined phase, and when "0" is input, digital modulation section 502 outputs a sine waveform with amplitude "0".

This embodiment converts input digital data expressed with two values to digital data expressed with three values, modulates the digital data and selects r out of N subcarriers, modulates the r subcarriers and sends amplitude [0] for the remaining (N-r) subcarriers (sends nothing). The number of patterns for selecting r out of N subcarriers is calculated with _{N}Cᵣ.

r subcarriers give either positive or negative values. In this case, it is understood that there can be _{N}Cᵣ·2^{r} ways of expression for 1 OFDM symbol. While each subcarrier of a conventional multi-carrier communication has either a positive or negative value, each subcarrier of the multi-carrier communication of the present invention can also take 0, and therefore there can also be cases where there is a large signal space, that is, _{N}Cᵣ·2^{r} > 2^{N}.

Thus, with the multi-carrier communication apparatus of this embodiment, some of subcarriers have amplitude "0", the number of patterns of the symbol data increases, that is, the symbol data space expands, and therefore no symbol pattern with large peak power is used. As a result, it is possible to suppress peak voltages of signals with a simple apparatus configuration without deteriorating the transmission characteristic or increasing the size of the apparatus.

Furthermore, the multi-carrier communication apparatus of this embodiment can easily collate the first and second data patterns and perform demapping efficiently. This makes it possible to correctly demodulate symbol data of a multi-carrier signal transmitted.

Furthermore, the multi-carrier communication apparatus of this embodiment can easily collate the first and second data patterns, allowing efficient mapping.

### (Embodiment 10)

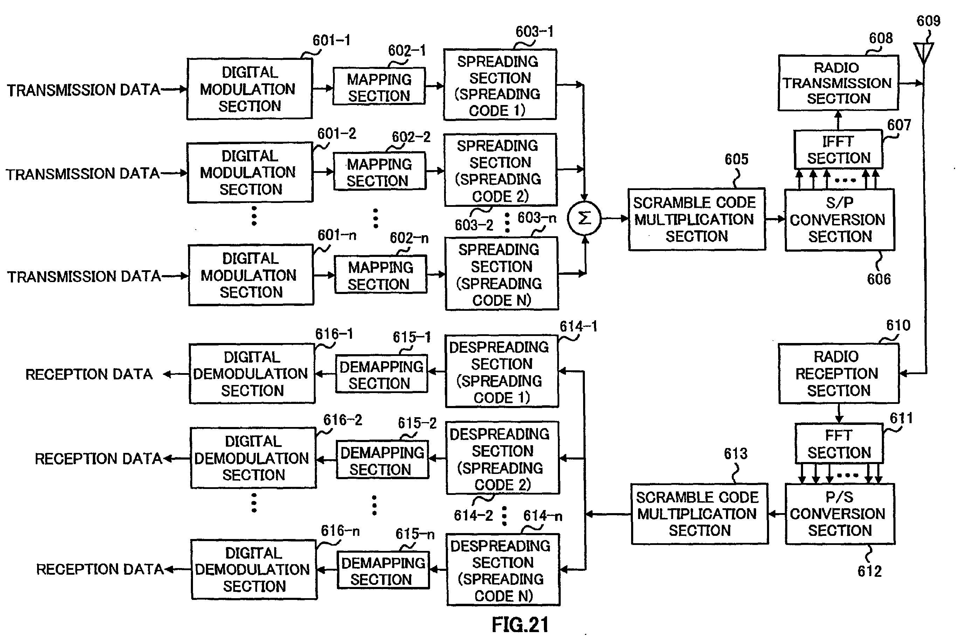

FIG.21 shows a configuration of a multi-carrier communication apparatus according to Embodiment 10 of the present invention.

In FIG.21, the multi-carrier communication apparatus is mainly constructed of n digital modulation sections 601-1 to 601-n, n mapping sections 602-1 to 602-n, n spreading sections 603-1 to 603-n, adder 604, scramble code multiplication section 605, S/P conversion section 606, IFFT section 607, radio transmission section 608, antenna 609, radio reception section 610, FFT section 611, P/S conversion section 612, scramble code multiplication section 613, n despreading sections 614-1 to 614-n, n demapping sections 615-1 to 615-n and n digital demodulation sections 616-1 to 616-n.

Mapping sections 602-1 to 602-n are constructed of any one of the mapping sections according to Embodiments 1 to 8. Furthermore, demapping sections 615-1 to 615-n are constructed of any one of the demapping sections according to Embodiments 1 to 8.

Digital modulation sections 601-1 to 601-n digital-modulate transmission data and output pre-conversion symbol patterns to mapping sections 602-1 to 602-n.

Mapping sections 602-1 to 602-n store information on the correspondence between pre-conversion symbol patterns and post-conversion symbol patterns and convert the pre-conversion symbol patterns output from digital modulation sections 601-1 to 601-n to post-conversion symbol patterns and output the post-conversion symbol patterns to spreading sections 603-1 to 603-n.

Spreading sections 603-1 to 603-n multiply n post-conversion symbol patterns output from mapping sections 602-1 to 602-n by different spreading codes and output to adder 604.

Adder 604 adds up n post-conversion symbol patterns output from spreading sections 603-1 to 603-n and outputs one transmission symbol pattern obtained to scramble code multiplication section 605.

Scramble code multiplication section 605 multiplies the transmission symbol pattern output from adder 604 by a scramble code which differs from one communication apparatus to another and outputs to S/P conversion section 606.

S/P conversion section 606 converts the transmission symbol pattern output from scramble code multiplication section 605 from serial to parallel and outputs the parallel data obtained to IFFT section 607.

IFFT section 607 performs an inverse fast Fourier transform on the parallel data output from S/P conversion section 606 and outputs the transmission signal after the inverse fast Fourier transform to radio transmission section 608.

Radio transmission section 608 converts the transmission signal from digital to analog, up-converts and sends it as a radio signal via antenna 609.

Antenna 609 sends a transmission signal output from radio transmission section 608 and outputs a received radio signal to radio reception section 610 as a received signal.

Radio reception section 610 down-converts the received signal and converts to an analog signal and outputs to FFT section 611.

FFT section 611 performs a fast Fourier transform on the received signal and outputs to P/S conversion section 612.

P/S conversion section 612 converts the received signal from parallel to serial, unites signals of subcarriers into serial data and outputs to scramble code multiplication section 613.

Scramble code multiplication section 613 multiplies the serial data output from P/S conversion section 612 by a scramble code which differs from one communication apparatus to another and outputs the received symbol pattern obtained to despreading sections 614-1 to 614-n.

Despreading sections 614-1 to 614-n multiply the received symbol pattern output from scramble code multiplication section 613 by spreading codes, despread the received symbol patterns and output to demapping sections 615-1 to 615-n.

Demapping sections 615-1 to 615-n store information on the correspondence between received symbol patterns and pre-conversion symbol patterns, convert the received symbol patterns output from despreading sections 614-1 to 614-n to pre-conversion symbol patterns and output to digital demodulation sections 616-1 to 616-n.

Digital demodulation sections 616-1 to 616-n demodulate the pre-conversion symbol patterns output from demapping sections 615-1 to 615-n and output the reception data.

Then, an operation of the multi-carrier communication apparatus according to Embodiment 10 will be explained. First, a transmission operation will be explained.

n transmission data pieces are digital-modulated by digital modulation sections 601-1 to 601-n, output to mapping sections 602-1 to 602-n as n pre-conversion symbol patterns, converted to n post-conversion symbol patterns by mapping sections 602-1 to 602-n and output to spreading sections 603-1 to 603-n.

Spreading sections 603-1 to 603-n multiply n post-conversion symbol patterns by different spreading codes, added up by adder 604 and output to scramble code multiplication section 605 as a single transmission symbol pattern.

The transmission symbol pattern is multiplied by scramble code multiplication section 605 by a scramble code which varies from one communication apparatus to another, converted from serial to parallel by S/P conversion section 606, subjected to an inverse Fourier transform by IFFT section 607 and output to radio transmission section608 as a transmission signal.

Radio transmission section 608 converts the transmission signal from digital to analog, up-converts and sends it as a radio signal via antenna 609.

Then, a reception operation will be explained.

The radio signal is received via antenna 609, down-converted and converted to an analog signal by radio reception section 610, subjected to a fast Fourier transform by FFT section 611, converted from parallel to serial by P/S conversion section 612 and output to scramble code multiplication section 613 as a received symbol.

The received symbol is multiplied by a scramble code which differs from one communication apparatus to another by scramble code multiplication section 613, output to despreading sections 614-1 to 614-n, multiplied by spreading codes by despreading sections 614-1 to 614-n and output to demapping sections 615-1 to 615-n as n received symbol patterns.

n received symbol patterns are converted to pre-conversion symbol patterns by demapping sections 615-1 to 615-n, demodulated by digital demodulation sections 616-1 to 616-n and output as reception data.

Then, signal processing by the multi-carrier communication apparatus according to Embodiment 10 will be explained.

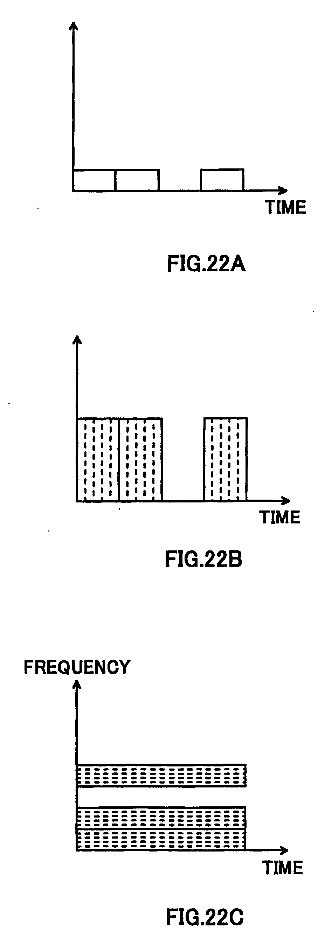

FIG.22A, FIG.22B and FIG.22C illustrate examples of signal processing according to Embodiment 10 of the present invention.

FIG.22A shows a symbol pattern including amplitude "0" obtained by subjecting a digital-modulated symbol pattern to mapping processing.

FIG.22B shows a symbol pattern obtained by subjecting the symbol pattern shown in FIG.22A to time area spreading. This symbol pattern consists of 5 chip components through five-fold spreading.

FIG.22C shows an example of the symbol pattern shown in FIG.22B converted from serial to parallel, distributed to subcarriers and multiplexed.

Thus, the multi-carrier communication apparatus according to this embodiment applies spreading processing to symbols converted to symbol patterns including amplitude "0", sends the spread symbols, and therefore no symbol patterns with large peak power are used. As a result, it is possible to suppress peak voltages of signals and increase the frequency utilization efficiency without deteriorating transmission characteristics or increasing the size of the apparatus.

### (Embodiment 11)

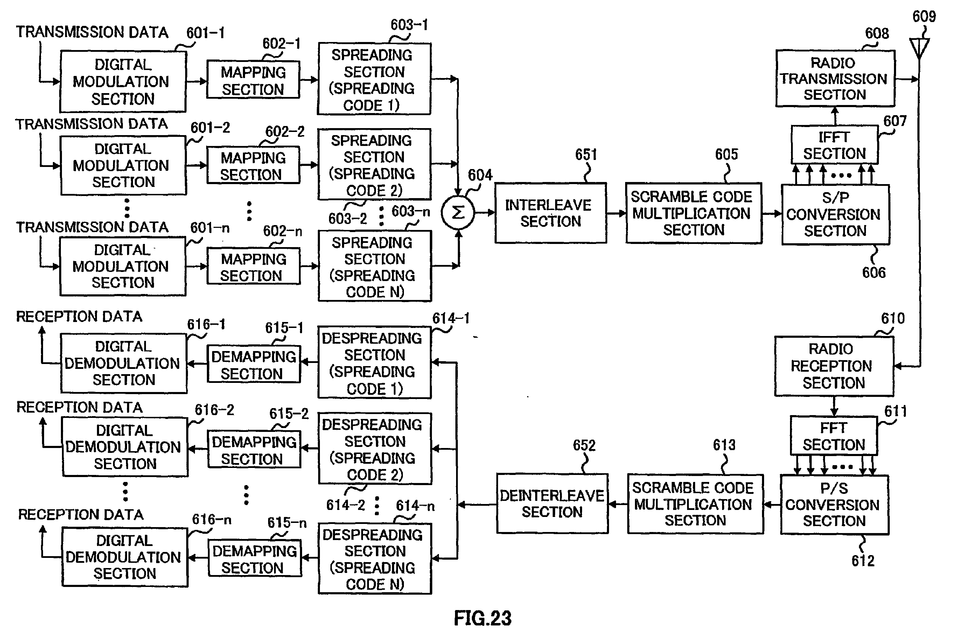

FIG.23 shows a configuration of a multi-carrier communication apparatus according to Embodiment 11 of the present invention. However, the same components as those in FIG.21 are assigned the same reference numerals and detailed explanations thereof will be omitted.

The multi-carrier communication apparatus in FIG.23 comprises interleave section 651, deinterleave section 652, and differs in that it carries out interleave on transmission symbols subjected to spreading processing chip by chip and performs deinterleave on signals subjected to parallel-serial conversion into received symbols after scramble code multiplication chip by chip.

In FIG.23, adder 604 adds up n post-conversion symbol patterns output from spreading sections 603-1 to 603-n and outputs the single transmission symbol pattern obtained to interleave section 651.

Interleave section 651 performs interleave on the transmission symbol output from adder 604 on a spreading code chip basis and outputs the interleaved transmission symbol to scramble code multiplication section 605.

Scramble code multiplication section 605 multiplies the transmission symbol pattern output from interleave section 651 by a scramble code which differs from one communication apparatus to another and outputs to S/P conversion section 606.

Scramble code multiplication section 613 multiplies the serial data output from P/S conversion section 612 by a scramble code which differs from one communication apparatus to another and outputs the received symbol pattern obtained to deinterleave section 652.

Deinterleave section 652 performs deinterleave on the received symbol pattern output from scramble code multiplication section 613 on a spreading code chip basis and outputs the deinterleaved received symbol pattern to despreading sections 614-1 to 614-n.

Despreading sections 614-1 to 614-n multiply the received symbol pattern output from deinterleave section 652 by the respective spreading codes to despread the received symbol pattern and output to demapping sections 615-1 to 615-n.

Thus, the multi-carrier communication apparatus of this embodiment performs chip-by-chip interleave on symbols subjected to spreading processing, sends the interleaved symbols and performs chip-by-chip interleave on the received symbols, and can thereby spread symbols chip by chip on the time axis in the case of time interleave and spread symbols on the frequency axis in the case of frequency interleave, thus providing communications resistant to burst errors.

Furthermore, the multi-carrier communication apparatus of this embodiment can also perform interleave on a transmission symbol multiplied by a scramble code.

In this case, interleave section 651 performs interleave processing on a transmission symbol output from scramble code multiplication section 605 and outputs to S/P conversion section 606. Furthermore, deinterleave section 652 performs deinterleave processing on the serial data output from S/P conversion section 612 and outputs the received symbol obtained to scramble code multiplication section 613.

### (Embodiment 12)

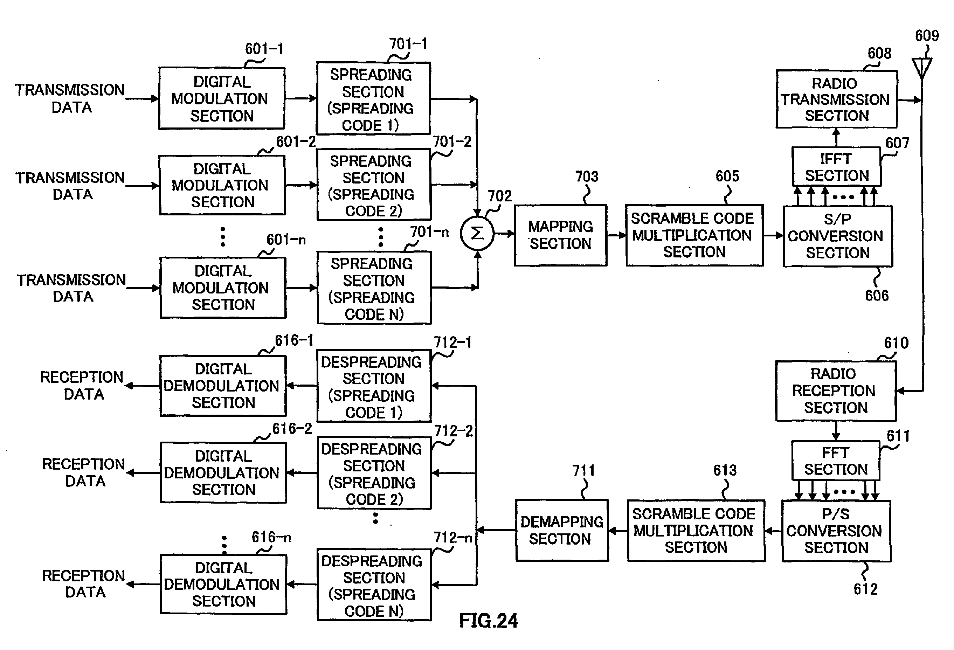

FIG.24 shows a configuration of a multi-carrier communication apparatus according to Embodiment 12 of the present invention. However, the same components as those in FIG.21 are assigned the same reference numerals and detailed explanations thereof will be omitted.

The multi-carrier communication apparatus in FIG.24 comprises n spreading sections 701-1 to 701-n, adder 702, mapping section 703, demapping section 711, n despreading sections 712-1 to 712-n, and differs in that a transmission symbol obtained by applying spreading processing and addition processing and then multiplexing is mapped and that a demapped received symbol is subjected to despreading processing.

In FIG.24, digital modulation sections 601-1 to 601-n digital-modulate transmission data and output the pre-conversion symbol patterns to spreading sections 701-1 to 701-n.

Spreading sections 701-1 to 701-n multiply n pre-conversion symbol patterns output from digital modulation sections 601-1 to 601-n by different spreading codes and output to adder 702.

Adder 702 adds up n post-conversion symbol patterns output from spreading sections 701-1 to 701-n and outputs a single transmission symbol pattern obtained to mapping section 703.

Mapping section 703 stores information on the correspondence between pre-conversion symbol patterns and post-conversion symbol patterns, converts the pre-conversion symbol patterns output from adder 702 to their respective post-conversion symbol patterns and outputs the post-conversion symbol patterns to scramble code multiplication section 605.

Scramble code multiplication section 605 multiplies the transmission symbol pattern output from mapping section 703 by a scramble code which differs from one communication apparatus to another and outputs to S/P conversion section 606.

Thus, the multi-carrier communication apparatus of this embodiment converts symbol patterns after spreading processing to symbol patterns including amplitude "0" and sends the converted symbol patterns, and therefore no symbol patterns with large peak power are used. As a result, it is possible to suppress peak voltages of signals and increase the frequency utilization efficiency with a simple apparatus configuration without deteriorating transmission characteristics or increasing the size of the apparatus.

### (Embodiment 13)

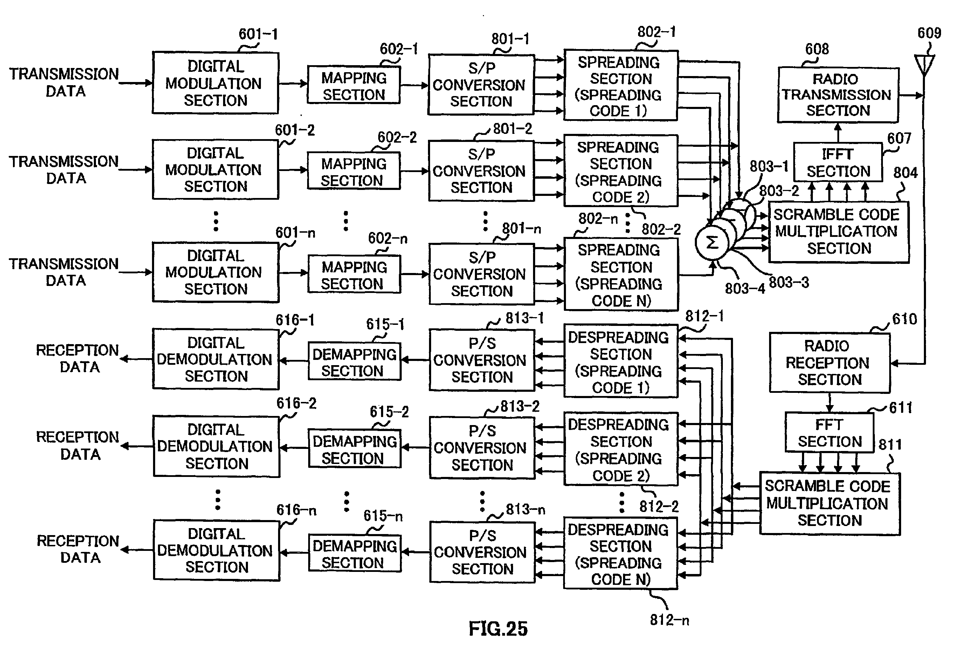

FIG.25 shows a configuration of a multi-carrier communication apparatus according to Embodiment 13 of the present invention. However, the same components as those in FIG.21 are assigned the same reference numerals and detailed explanations thereof will be omitted.

The multi-carrier communication apparatus in FIG.25 comprises n S/P conversion sections 801-1 to 801-n, n spreading sections 802-1 to 802-n, adders 803-1 to 803-4, scramble code multiplication section 804, scramble code multiplication section 811, n despreading sections 812-1 to 812-n and n P/S conversion section 813-1 to 813-n, and differs in that spreading processing is applied to parallel series symbol patterns obtained by converting a mapped symbol pattern including "0" from serial to parallel and a symbol pattern obtained by adding up the respective parallel series data pieces is multiplied by a scramble code and subjected to spreading processing.

In FIG.25, mapping sections 602-1 to 602-n store information on the correspondence between pre-conversion symbol patterns and post-conversion symbol patterns, convert the pre-conversion symbol patterns output from digital modulation sections 601-1 to 601-n to post-conversion symbol patterns and output the post-conversion symbol patterns to S/P conversion sections 801-1 to 801-n.

S/P conversion sections 801-1 to 801-n convert the post-conversion symbol patterns output from demapping section 602-1 to 602-n from serial to parallel and outputs the parallel-series symbol patterns obtained to spreading sections 802-1 to 802-n.

Spreading sections 802-1 to 802-n multiply the parallel-series symbol patterns output from S/P conversion sections 801-1 to 801-n by different spreading codes and output to adders 803-1 to 803-4. The spreading code multiplied here is the same spreading code used for the symbol pattern output from the same S/P conversion section and spreading codes which differ from one S/P conversion to another are used.

Adders 803-1 to 803-4 add up n post-conversion symbol patterns output from spreading sections 802-1 to 802-n and output the transmission symbol patterns obtained to scramble code multiplication section 804.

Scramble code multiplication section 804 multiplies the transmission symbol patterns output from adders 803-1 to 803-4 by different scramble codes and outputs to IFFT section 607.

IFFT section 607 performs an inverse fast Fourier transform on the transmission symbol patterns output from scramble code multiplication section 804 and outputs the transmission signal after the inverse fast Fourier transform to radio transmission section 608.

FFT section 611 performs a fast Fourier transform on a received signal and outputs to scramble code multiplication section 811.

Scramble code multiplication section 811 multiplies the parallel data output from FFT section 611 by the scramble codes multiplied during transmission and outputs the received symbol patterns obtained to despreading sections 812-1 to 812-n.

Despreading sections 812-1 to 812-n multiply the received symbol patterns output from scramble code multiplication section 811 by their respective spreading codes, despread the received symbol patterns and output to n P/S conversion sections 813-1 to 813-n.

P/S conversion sections 813-1 to 813-n convert the received symbol patterns output from despreading sections 812-1 to 812-n from parallel to serial and output to demapping sections 615-1 to 615-n.

Demapping sections 615-1 to 615-n store information on the correspondence between the received symbol patterns and pre-conversion symbol patterns, convert the received symbol patterns output from P/S conversion sections 813-1 to 813-n to pre-conversion symbol patterns and output to digital demodulation sections 616-1 to 616-n.

Then, signal processing by the multi-carrier communication apparatus according to Embodiment 13 will be explained.

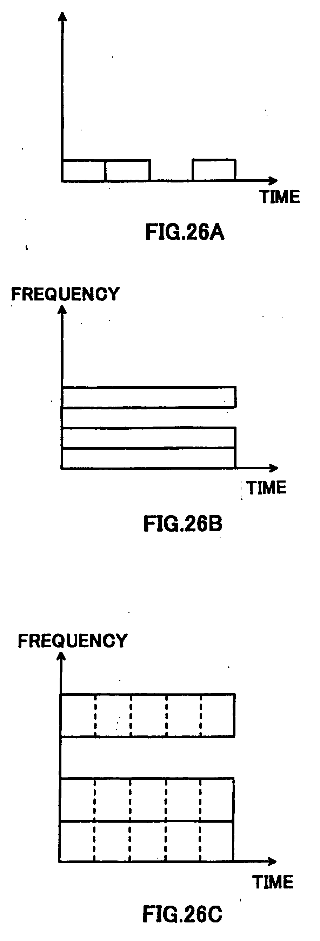

FIG.26A, FIG.26B and FIG.26C illustrate examples of signal processing according to Embodiment 13 of the present invention.

FIG.26A shows a symbol pattern including amplitude "0" obtained by mapping a digital-modulated symbol pattern.

FIG. 26B shows an example of a symbol pattern obtained from the symbol pattern shown in FIG.26A converted from serial to parallel, distributed into subcarriers and multiplexed.

FIG.26C shows a symbol pattern obtained by applying time area spreading to the symbol patterns shown in FIG.26B. This symbol pattern is generated with symbols made up of five chip components through five-fold spreading.

Thus, the multi-carrier communication apparatus of this embodiment applies spreading processing to symbols converted to symbol patterns including amplitude "0", sends the converted symbols, and therefore no symbol patterns with large peak power are used. As a result, it is possible to suppress peak voltages of signals and increase the frequency utilization efficiency without deteriorating transmission characteristics or increasing the size of the apparatus.

Furthermore, the multi-carrier communication apparatus according to this embodiment performs spreading processing on parallel-series symbol patterns subjected to serial-parallel conversion and can also apply mapping to a symbol pattern resulting from adding up the parallel series data pieces.

### (Embodiment 14)

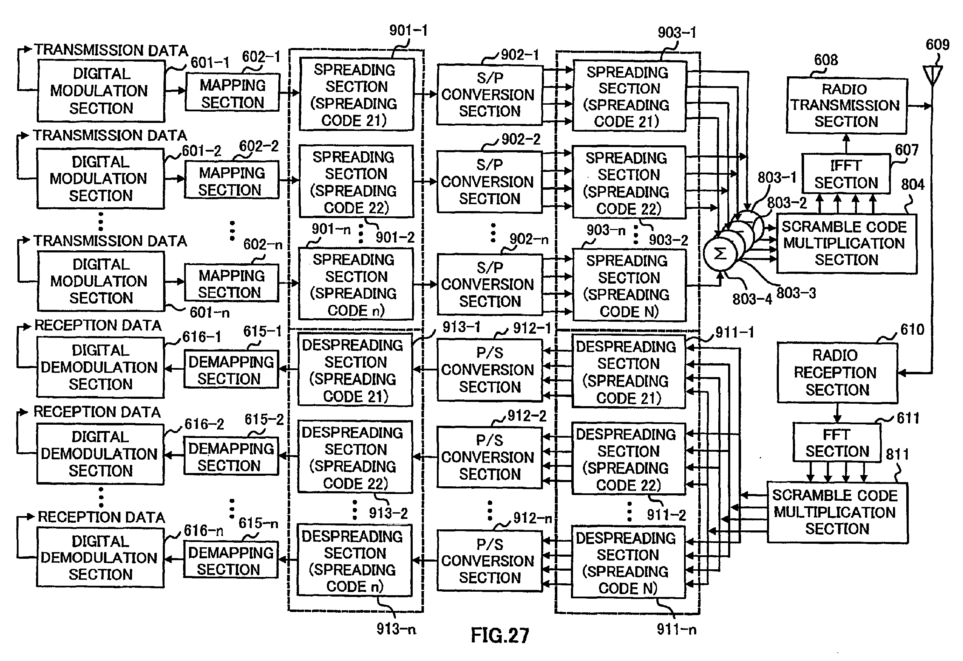

FIG.27 shows a configuration of a multi-carrier communication apparatus according to Embodiment 14 of the present invention. However, the same components as those in FIG.21 or FIG.25 are assigned the same reference numerals and detailed explanations thereof will be omitted.

The multi-carrier communication apparatus in FIG.27 comprises n spreading sections 901-1 to 901-n, n despreading sections 911-1 to 911-n, n S/P conversion sections 902-1 to 902-n and spreading sections 903-1 to 903-n, and differs from FIG.25 in that spreading processing is applied to mapped symbol patterns including "0" and the spread symbol patterns are subjected to serial-parallel conversion.

In FIG.27, mapping sections 602-1 to 602-n store information on the correspondence between pre-conversion symbol patterns and post-conversion symbol patterns, convert the pre-conversion symbol patterns output from digital modulation sections 601-1 to 601-n to post-conversion symbol patterns and output the post-conversion symbol patterns to spreading sections 901-1 to 901-n.

Spreading sections 901-1 to 901-n multiply the post-conversion symbol patterns output from mapping sections 602-1 to 602-n by spreading codes and output to S/P conversion sections 902-1 to 902-n.

S/P conversion sections 902-1 to 902-n convert the post-conversion symbol patterns output from spreading sections 901-1 to 901-n from serial to parallel and output the parallel series symbol patterns obtained to spreading sections 903-1 to 903-n.

Spreading sections 903-1 to 903-n multiply the parallel series symbol patterns output from S/P conversion sections 902-1 to 902-n by different spreading codes and output to adders 803-1 to 803-4. The spreading code multiplied here is the same spreading code used for the symbol pattern output from the same S/P conversion section and spreading codes which differ from one S/P conversion to another are used.

The spreading codes multiplied at spreading sections 903-1 to 903-n are different from spreading codes multiplied at spreading sections 901-1 to 901-n.

Adders 803-1 to 803-4 add up n post-conversion symbol patterns output from spreading sections 903-1 to 903-n and output the transmission symbol patterns obtained to scramble code multiplication section 804.

Scramble codemultiplication section 811 multiplies the parallel data output from FFT section 611 by scramble codes multiplied during transmission and outputs the received symbol patterns obtained to despreading sections 911-1 to 911-n.

Despreading sections 911-1 to 911-n multiply the received symbol patterns output from scramble code multiplication section 811 by their respective spreading codes, despread the received symbol patterns and output to n P/S conversion sections 912-1 to 912-n.

P/S conversion sections 912-1 to 912-n convert the received symbol patterns output from despreading sections 911-1 to 911-n from parallel to serial and outputs to despreading sections 913-1 to 913-n.

Despreading sections 913-1 to 913-n multiply the received symbol patterns output from P/S conversion sections 912-1 to 912-n by spreading codes and output to demapping section 615-1 to 615-n.

Demapping sections 615-1 to 615-n store information on the correspondence between the received symbol patterns and pre-conversion symbol patterns, converts the received symbol patterns output from P/S conversion sections 813-1 to 813-n to pre-conversion symbol patterns and output to digital demodulation sections 616-1 to 616-n.

Thus, the multi-carrier communication apparatus of this embodiment performs spreading processing on symbols converted to symbol patterns including amplitude [0] and sends the spread symbol patterns, and therefore no symbol patterns with large peak power are used. Furthermore, multiplying spread signals using codes which differ from one communication apparatus to another allows a plurality of transmitters to send signals using a same band. As a result, it is possible to suppress peak voltages of signals and increase the frequency utilization efficiency without deteriorating the transmission characteristics or increasing the size of the apparatus.

Furthermore, the multi-carrier communication apparatus of this embodiment can also rearrange transmission signals in order of subcarriers or in order of transmission times in chip units.

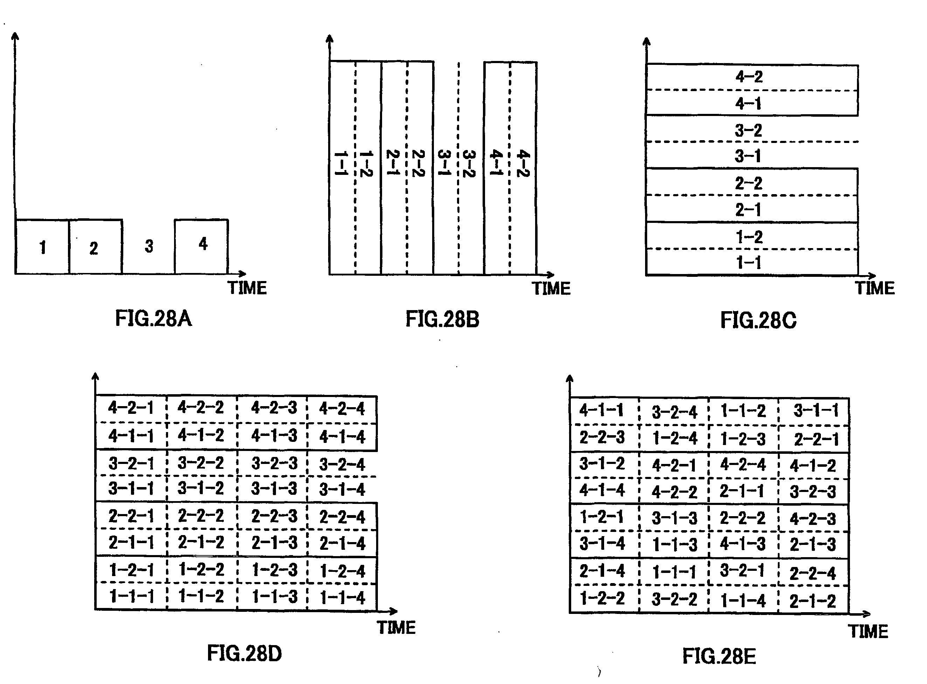

FIG.28A, FIG.28B, FIG.28C, FIG.28D and FIG.28E illustrate examples of signal processing of Embodiment 14 of the present invention.

FIG.28A illustrates a symbol pattern including amplitude "0" obtained by performing mapping processing on the digital-modulated symbol pattern.

FIG.28B illustrates a symbol pattern obtained by performing time area spreading on the symbol pattern shown in FIG.28A. FIG.28C shows a symbol pattern obtained by performing frequency area spreading on the symbol pattern shown in FIG.28A.

The multi-carrier communication apparatus of Embodiment 14 of the present invention performs time area spreading and frequency area spreading, generates symbol patterns spread two-dimensionally using the time axis and carrier frequency axis shown in FIG.28D and can perform chip-by-chip interleave on these symbol patterns two-dimensionally using the time axis and carrier frequency axis.

FIG.28E shows symbol patterns subjected to the above-described interleave.

Thus, by performing chip-by-chip interleave two-dimensionally using the time axis and carrier frequency axis, it is possible to spread symbols on the time axis and frequency axis chip by chip, and therefore it is possible to provide communications resistant to burst errors and frequency selective fading.

Above-described Embodiments 1 to 14 have described cases where values "+1" and "-1" obtained when data is BPSK-modulated are converted to three values of "+1", "-1" and "0", but the present invention is not limited to this and it is also possible to perform QPSK modulation, etc. on the data and convert two values of "+1" and "-1" to three values of "+1", "-1" and "0" for one or both of the in-phase component and quadrature component.

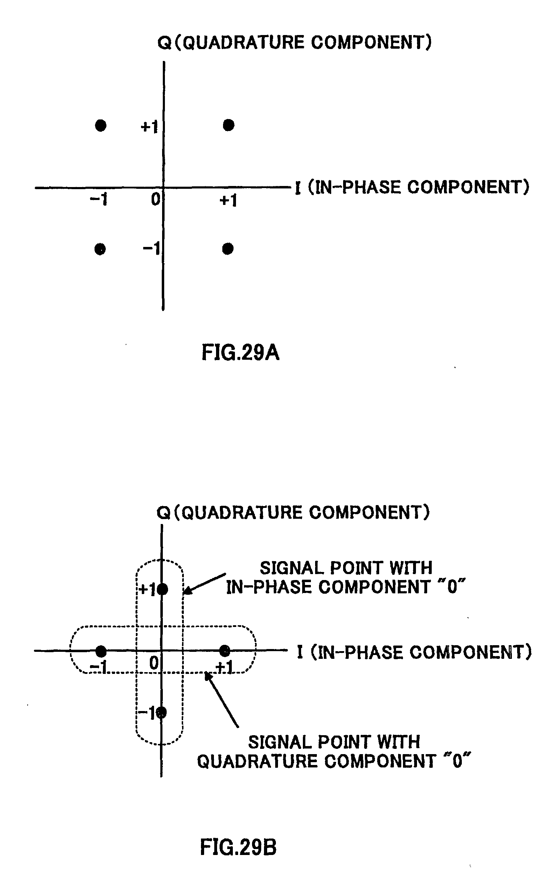

For example, mapping is performed so that a signal point layout of normal QPSK modulation shown in FIG.29A becomes a signal point layout of normal BPSK modulation shown in FIG.29B. In this case, a decision in the case of BPSK modulation is performed on the in-phase component and quadrature component. That is, for the in-phase component and quadrature component of each subcarrier component, a 3-value decision is made on the amplitude or the amplitude is decided to be "0" for only a necessary number of subcarriers and a polarity decision is made on the remaining subcarriers. In this way, as in the case of BPSK modulation, the number of symbol patterns per 1 OFDM increases, that is, the signal space expands, and therefore it is also possible to reduce peak power using patterns with small peak power and perform high-speed transmission by increasing the amount of data per 1 OFDM.

Furthermore, the present invention is not limited to this and it is also possible to perform 16QAM, etc. on data and convert three values of "+3", "+1", "-1" and "-3" to five values of "+3", "+1", "-1", "-3" and "0" for one or both of the in-phase component and quadrature component.

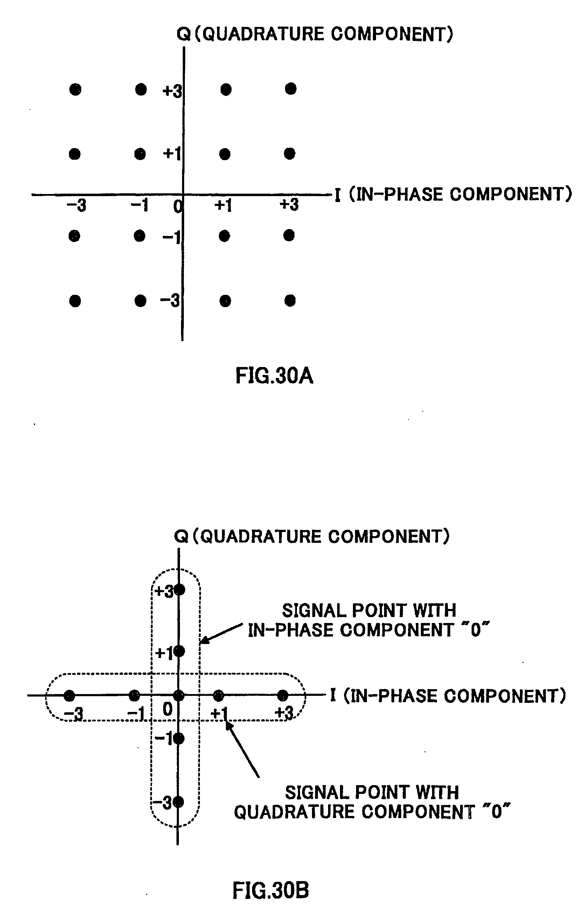

For example, mapping is performed so that a signal point layout of normal 16QAM shown in FIG.30A becomes a signal point layout of 16QAM shown in FIG.30B. In this case, for the in-phase component and quadrature component of each subcarrier component, the amplitude is decided to be "0" for a necessary number of subcarriers and a 4-value decision is made on the remaining subcarriers. In this way, as in the case of BPSK modulation, the number of symbol patterns per 1 OFDM increases, that is, the signal space expands, and therefore it is possible to increase the amount of data per 1 OFDM and perform high-speed transmission.

Above-described Embodiments 1 to 14 have described cases where each subcarrier component is decided one by one through an amplitude decision, but the present invention is also applicable to a case where a decision is made on an entire symbol pattern (e.g., components for all 4 subcarriers in the case of a symbol pattern with 4 subcarriers) through maximum likelihood series estimation.

For example, channel estimation is performed using known signals such as pilot symbols and the channel estimated value obtained is multiplied on each symbol pattern to generate a replica signal of a received symbol pattern. Then, the replica signal is compared with the received symbol pattern and the most resembling replica signal is decided to be the symbol pattern transmitted. Whether a replica signal is most resembling or not is decided using a method, for example, of comparing the replica signal with the received symbol pattern for each subcarrier component, finding the difference and determining the symbol pattern corresponding to the replica signal with the smallest total difference as the symbol pattern transmitted.

In this case, it is possible to decide symbol patterns all together and decide symbol patterns more accurately.

Above-described Embodiments 1 to 14 have described cases where the apparatuses on the transmitting side and on the receiving side are installed on the same apparatus, but the transmitting side apparatus and receiving side apparatus need not necessarily be installed on the same apparatus as far as the present invention has a configuration that the multi-carrier communication apparatus including the mapping section according to the present invention is installed in the apparatus on the transmitting side and the multi-carrier communication apparatus including the demapping section according to the present invention is installed in the apparatus on the receiving side.

The multi-carrier communication apparatus of above-described Embodiments 1 to 14 can be installed in a communication terminal apparatus or base station apparatus.

The present invention is not limited to above-described Embodiments 1 to 14 but can be implemented with various modifications. For example, the number of thresholds or the number of subcarriers in above-described Embodiments 1 to 14 are not limited to particular values.

Above-described Embodiments 12 to 14 can also perform chip interleave processing on spread symbol strings. In this case, symbol strings subject to chip interleave need only to be subjected to spreading code processing and chip interleave can be realized by providing an interleave section between the spreading section and the IFFT section of the multi-carrier communication apparatus of above-described Embodiments 12 to 14.

Furthermore, in above-described Embodiments 12 to 14, the multi-carrier communication apparatus can also include a plurality of interleave sections and perform chip interleave on each symbol string subjected to spreading processing prior to multiplexing.

Likewise, above-described Embodiments 12 to 14 can perform chip deinterleave processing on a spread symbol string. In this case, the symbol string subject to chip deinterleave needs only to be subjected to spreading code processing and it is possible to perform chip deinterleave by providing a deinterleave section between the FFT section and despreading section of the multi-carrier communication apparatus of above-described Embodiments 12 to 14.

Furthermore, the multi-carrier communication apparatus of above-described Embodiments 12 to 14 can also include a plurality of deinterleave sections and perform chip deinterleave for each symbol string subjected to spreading processing prior to multiplexing.

The multi-carrier communication apparatus of the present invention adopts a configuration comprising a reception section that receives a multi-carrier signal mapped to subcarriers with a first symbol string including a first symbol with the amplitude of at least one of the in-phase component and quadrature component set to "0" and a demapping section that demaps the above-described multi-carrier signal to reception data.

The multi-carrier communication apparatus of the present invention adopts a configuration with the demapping section demapping amulti-carrier signal mapped to subcarriers with a first symbol string including a first symbol to a second symbol string excluding the above-described first symbol in predetermined symbol units and demodulating the demapped symbol pattern to obtain reception data.

The multi-carrier communication apparatus of the present invention adopts a configuration with the demapping section demodulating a multi-carrier signal mapped to subcarriers with a first symbol string including a first symbol and converting the demodulated first data expressed with three discrete values to second data expressed with two discrete values.

These configurations cause some of subcarriers to be set to amplitude "0", increasing the number of patterns of symbol data, that is, expanding the symbol data space, and therefore no symbol patterns with large peak power are used. As a result, it is possible to suppress peak voltages of signals with a simple apparatus configuration without deteriorating the transmission characteristics or increasing the size of the apparatus.

The multi-carrier communication apparatus of the present invention adopts a configuration with the demapping section comprising a storage section that stores a table of correspondence between a first symbol string and second symbol string and a collation section that checks a received symbol string against the above-described table.

This configuration makes it possible to simply collate between the first and second symbol patterns and perform efficient demapping. This makes it possible to correctly demodulate symbol data of transmitted multi-carrier signals.

The multi-carrier communication apparatus of the present invention adopts a configuration with the demapping section comprising a storage section that stores a table of correspondence between a second data pattern expressed with two discrete values and a first data pattern expressed with three discrete values.

The multi-carrier communication apparatus of the present invention adopts a configuration comprising a retransmission requesting section that requests the transmitting side for retransmission when the received symbol string cannot be associated with any patterns in the table.

This configuration makes it possible to receive symbol data without errors by carrying out retransmission even if the received symbol data includes errors during transmission, etc.

The multi-carrier communication apparatus of the present invention adopts a configuration comprising.an error correcting section that corrects errors of a received symbol string when the above-described symbol cannot be associated with any patterns in the table.

This configuration makes it possible to receive symbol data without errors by carrying out error correction even if the received symbol data includes errors during transmission, etc.

The multi-carrier communication apparatus of the present invention adopts a configuration with the demapping section including an amplitude measuring section that measures the amplitude of a symbol mapped to each subcarrier and a pattern decision section that decides the above-described first symbol string based on the measured amplitude.

This configuration makes it possible to correctly decide symbol patterns including symbols with amplitude "0".

The multi-carrier communication apparatus of the present invention adopts a configuration with the demapping section including a first decision section that decides a subcarrier to which a first symbol is mapped according to the number of subcarriers to which the first symbol with amplitude "0" is mapped and a second decision section that decides symbols other than the symbol decided to be the first symbol with the above-described symbol string through a polarity decision.

This configuration makes it possible to correctly decide symbol patterns including symbols with amplitude "0" in the first decision and needs only a polarity decision to decide other symbols, and can thereby decide symbol patterns more correctly.

The multi-carrier communication apparatus of the present invention adopts a configuration with the demapping section performing demapping by associating a plurality of first symbol strings with one data pattern in predetermined symbol units.

The multi-carrier communication apparatus of the present invention adopts a configuration with the demapping section including a combination section that combines a plurality of symbols as a combined symbol, a first decision section that decides a symbol having the smallest amplitude value of the above-described combined symbols as a first symbol and a second decision section that performs a polarity decision on symbols other than the above-described first symbol.

The multi-carrier communication apparatus of the present invention adopts a configuration with the combination section selecting and combining a plurality of symbols.

The multi-carrier communication apparatus of the present invention adopts a configuration with the combination section combining a plurality of symbols with an equal gain.

The multi-carrier communication apparatus of the present invention adopts a configuration with the combination section combining a plurality of symbols with a maximum ratio.

These configurations cause some of subcarriers to have amplitude "0", increasing the number of patterns of symbol data, that is, expanding the symbol data space, and therefore no symbol patterns with large peak power are used. As a result, it is possible to suppress peak voltages of signals with a simple apparatus configuration without deteriorating transmission characteristics or increasing the size of the apparatus.

The multi-carrier communication apparatus of the present invention adopts a configuration comprising a channel estimation section that estimates channels using a known signal, a replica signal generation section that generates a replica signal of a first symbol string mapped to subcarriers with the first symbol string including the first symbol using the result of above-described channel estimation, a received symbol pattern decision section that decides a received symbol pattern by comparing the above-described replica signal with the received symbol pattern and a demodulation section that obtains reception data from the decided received symbol pattern.

This configuration makes it possible to decide symbol patterns all together and decide symbol patterns more accurately.

The multi-carrier communication apparatus of the present invention adopts a configuration comprising a mapping section that maps data to be sent to subcarriers with the first symbol string including the first symbol and a transmission section that transmits mapped multi-carrier signals.

The multi-carrier communication apparatus of the present invention adopts a configuration with the mapping section mapping the second symbol string obtained by modulating data to be sent to subcarriers with the first symbol string including the first symbol.

The multi-carrier communication apparatus of the present invention adopts a configuration with the mapping section converting second data expressed with two discrete values to be sent to first data expressed with three discrete values and modulating the above-described first data to the first symbol string including the first symbol.

These configurations perform transmission with the first symbol string including the first symbol with the amplitude of at least one of the in-phase component and quadrature component set to "0", allowing multi-carrier communications with suppressed peak power.

The multi-carrier communication apparatus of the present invention adopts a configuration with the mapping section including a storage section that stores a table of correspondence between the first symbol string and second symbol string.

This configuration makes it possible to simply collate between the first and second symbol patterns, allowing efficient mapping.

The multi-carrier communication apparatus of the present invention adopts a configuration with the mapping section including a storage section that stores a table of correspondence between a second data pattern expressed with two discrete values and a first data pattern expressed with three discrete values.

This configuration makes it possible to simply collate between the first and second data patterns, allowing efficient mapping.

The multi-carrier communication apparatus of the present invention adopts a configuration with the mapping section fixing the number of subcarriers to which the first symbol is mapped.

The multi-carrier communication apparatus of the present invention adopts a configuration comprising a notification section that notifies the number of subcarriers to which the first symbol is mapped.

These configurations cause some of subcarriers to have amplitude "0", increasing the number of patterns of symbol data, that is, expanding the symbol data space, and therefore no symbol patterns with large peak power are used. As a result, it is possible to suppress peak voltages of signals with a simple apparatus configuration without deteriorating transmission characteristics or increasing the size of the apparatus.

The multi-carrier communication apparatus of the present invention adopts a configuration with the mapping section having the Euclidean distance between a first symbol string and another first symbol string mapped by the mapping section equal to or greater than a predetermined distance.

The multi-carrier communication apparatus of the present invention adopts a configuration with a first symbol string and another first symbol string mapped by the mapping section having different positions of subcarriers to which the first symbol is mapped.

The multi-carrier communication apparatus of the present invention in this configuration associates symbol patterns having a Euclidean distance equal to or greater than a predetermined distance with different conventional data patterns, and can thereby distinguish from other symbols even if symbols change due to influence from the path such as fading.

The multi-carrier communication apparatus of the present invention adopts a configuration with the mapping section associating one data pattern with a plurality of first symbol strings and the transmission section sending any one of the above-described plurality of first symbol strings.

The multi-carrier communication apparatus of the present invention in this configuration can receive correct symbols when errors occur in a transmitted symbol due to influence such as fading, by receiving the symbol as any one of a plurality of symbols associated with the data transmitted.

The multi-carrier communication apparatus of the present invention adopts a configuration with a Euclidean distance between a first symbol string corresponding to one data piece to be sent and another first symbol string corresponding to the above-described data to be sent mapped by the mapping section is equal to or smaller than the Euclidean distance from the other first symbol string.

The multi-carrier communication apparatus of the present invention in this configuration associates symbol patterns having a shorter Euclidean distance with one conventional data pattern, and can thereby distinguish from other symbols even if symbols change due to influences from the path such as fading.

The multi-carrier communication apparatus of the present invention adopts a configuration with the mapping section placing a first symbol on a subcarrier which is different from the subcarrier on which the first symbol was placed in the past in the first symbol string to be sent.

The multi-carrier communication apparatus of the present invention adopts a configuration with the mapping section including an insertion position storage section that stores the position and timing of a first symbol in the first symbol string.

The multi-carrier communication apparatus of the present invention adopts a configuration with the mapping section including a random number generation section that determines the position and timing of a first symbol in the first symbol string according to random numbers.

The multi-carrier communication apparatus of the present invention in these configurations sends symbols by alternately associating the symbols with different positions of subcarriers having amplitude "0", eliminates the need to send the same symbol consecutively, and can thereby reduce interference among symbols.

The multi-carrier communication apparatus of the present invention adopts a configuration with the mapping section using a set of a plurality of first symbols for one first symbol and mapping from the data pattern to the first symbol string.

The multi-carrier communication apparatus of the present invention in this configuration combines a plurality of subcarriers having amplitude "0" as one pattern and can thereby perform communications with few errors by deciding from the positions of the plurality of subcarriers having amplitude "0" even if signals change due to influences from the path such as fading.

The multi-carrier communication apparatus of the present invention adopts a configuration including a first spreading section that spreads a symbol string at a predetermined spreading rate.

The multi-carrier communication apparatus of the present invention adopts a configuration with the first spreading section spreading the first symbol string including the first symbol mapped by the mapping section at a predetermined spreading rate.

The multi-carrier communication apparatus of the present invention adopts a configuration including a serial-parallel conversion section that converts from serial to parallel the first symbol string including the first symbol spread at a predetermined spreading rate by the first spreading section.

These configurations apply spreading processing to the symbols converted to symbol patterns including amplitude "0" and send the spread symbols using no symbol patterns with large peak power, and can also send a plurality of signals through code multiplexing using the same band. As a result, it is possible to suppress peak voltages of signals without deteriorating transmission characteristics or increasing the size of the apparatus and improve the frequency utilization efficiency.

The multi-carrier communication apparatus of the present invention adopts a configuration with the first spreading section multiplying the second symbol string obtained by modulating data to be sent by a spreading code and the mapping section mapping the above-described second symbol string to subcarriers with the first symbol string including the first symbol.

This configuration converts code-multiplexed spread symbol patterns to symbol patterns including amplitude "0", sends the symbol patterns, and therefore no symbol patterns with large peak power are used. As a result, it is possible to suppress peak voltages of signals with a simple apparatus configuration without deteriorating transmission characteristics or increasing the size of the apparatus and improve the frequency utilization efficiency.

The multi-carrier communication apparatus of the present invention adopts a configuration including a serial-parallel conversion section that converts a symbol string from serial to parallel and the first spreading section spreading the first symbol string converted from serial to parallel at a predetermined spreading rate.

The multi-carrier communication apparatus of the present invention adopts a configuration with the serial-parallel conversion section converting from serial to parallel the first symbol string including the first symbol mapped by the mapping section.

The multi-carrier communication apparatus of the present invention adopts a configuration with the mapping section mapping the symbol string spread by the first spreading section.

The multi-carrier communication apparatus of the present invention adopts a configuration including a second spreading section that spreads the first symbol string including the first symbol mapped by the mapping section at a predetermined spreading rate, with the serial-parallel conversion section performing serial-parallel conversion on the first symbol string multiplied by the above-described spreading code by the second spreading section.

The multi-carrier communication apparatus of the present invention adopts a configuration including a second spreading section that converts the second symbol string at a predetermined spreading rate, with the serial-parallel conversion section performing serial-parallel conversion on the second symbol string multiplied by the above-described spreading code by the second spreading section and the mapping section performing mapping processing on the signal spread by the first spreading section.

These configurations apply spreading processing to the symbols converted to symbol patterns including amplitude "0" and send the symbols, and thereby use no symbol patterns with large peak power. These configurations also allow a plurality of transmitters to send spread signals using a same band by multiplying the spread signals by codes which differ from one communication apparatus to another. As a result, it is possible to suppress peak voltages of signals without deteriorating transmission characteristics or increasing the size of the apparatus and improve the frequency utilization efficiency.

The multi-carrier communication apparatus of the present invention adopts a configuration including a two-dimensional interleave section that performs chip-by-chip rearrangement for a spread transmission signal in order of subcarriers and in order of transmission times.

This configuration performs chip-by-chip interleave two-dimensionally using the time axis and carrier frequency axis and spreads symbols on the time axis and carrier frequency axis chip by chip, and can thereby perform communications resistant to burst errors and frequency selective fading.

The multi-carrier communication apparatus of the present invention adopts a configuration including a third spreading section that spreads the signal spread by the first spreading section using spreading codes which differ from one communication apparatus to another at a predetermined spreading rate.

This configuration applies spreading processing to the symbols converted to symbol patterns including amplitude "0", sends the symbols and thereby uses no symbol patterns with large peak power. Furthermore, this configuration allows a plurality of transmitters to send signals using a same band by multiplying the spread signals using codes which differ from one communication apparatus to another. As a result, it is possible to suppress peak voltages of signals without deteriorating transmission characteristics or increasing the size of the apparatus and improve the frequency utilization efficiency.

The multi-carrier communication apparatus of the present invention adopts a configuration including an interleave section that performs chip-by-chip rearrangement on transmission signals spread by the third spreading section.

The multi-carrier communication apparatus of the present invention adopts a configuration including an interleave section that performs chip-by-chip rearrangement on transmission signals spread by the first spreading section.

The multi-carrier communication apparatus of the present invention adopts a configuration including a third spreading section that spreads signals rearranged chip by chip by the interleave section using spreading codes which differ from one communication apparatus to another at a predetermined spreading rate.

These configurations apply chip-by-chip interleave to spread symbols, send the spread symbols and apply chip-by-chip deinterleave to received symbols, and can thereby spread symbols on the time axis chip by chip in the case of time interleave and spread symbols on the frequency axis in the case of frequency interleave, thereby realizing communications resistant to burst errors.

The communication apparatus of the present invention is characterized by comprising the above-described multi-carrier communication apparatus. Furthermore, the base station apparatus of the present invention is characterized by comprising the above-described multi-carrier communication apparatus. These configurations allow multi-carrier communications with suppressed peak power.

These configurations cause some of subcarriers to have amplitude "0", increasing the number of patterns of symbol data, that is, expanding the symbol data space, and therefore no symbol patterns with large peak power are used. As a result, it is possible to suppress peak voltages of signals with a simple apparatus configuration without deteriorating transmission characteristics or increasing the size of the apparatus.

The peak power suppression method of the present invention comprises the transmitter side including a mapping step of mapping data to be sent to subcarriers with a first symbol string including a first symbol and a transmitting step of transmitting the mapped multi-carrier signal, and the receiver side including a receiving step of receiving the multi-carrier signal mapped to subcarriers with the first symbol string including the above-described first symbol and a demapping step of demapping the above-described multi-carrier signal to reception data.

The peak power suppression method of the present invention is characterized by the mapping step in which the second symbol string obtained by modulating data to be sent is mapped to subcarriers with the first symbol string including the first symbol.

The peak power suppression method of the present invention is characterized by the mapping step in which second data to be sent expressed with two discrete values is converted to first data expressed with three discrete values and the above-described first data is modulated to the first symbol string including the first symbol.

The peak power suppression method of the present invention is characterized by the demapping step in which a multi-carrier signal mapped to subcarriers with the first symbol string including the first symbol is demapped to the second symbol string excluding the above-described first symbol in predetermined symbol units and the demapped symbol pattern is demodulated to obtain reception data.

The peak power suppression method of the present invention is characterized by the demapping step in which a multi-carrier signal mapped to subcarriers with the first symbol string including the first symbol is demodulated and the demodulated first data expressed with three discrete values is converted to second data expressed with two discrete values.

These configurations cause some of subcarriers to have amplitude "0", increasing the number of patterns of symbol data, that is, expanding the symbol data space, and therefore if only a required number of patterns are selected in ascending order of peak power and used for transmission, no symbol patterns with large peak power are used. As a result, it is possible to suppress peak voltages of signals with a simple apparatus configuration without deteriorating transmission characteristics or increasing the size of the apparatus.

The peak power suppression method of the present invention is characterized by the demapping step including an amplitude measuring step of measuring the amplitude of a symbol mapped to each subcarrier and a pattern deciding step of deciding the above-described first symbol string based on the measured amplitude.

This method makes it possible to accurately decide symbol patterns including symbols of amplitude "0".

The peak power suppression method of the present invention is characterized by the transmitter side including a notifying step of notifying the number of subcarriers to which a first symbol with amplitude "0" is mapped, and by the demapping step on the receiver side including a first deciding step of deciding a subcarrier to which the above-described first symbol is mapped according to the number of subcarriers to which the first symbol with amplitude "0" is mapped and a second deciding step of deciding polarity about symbols other than the above-described first symbol.

This method can accurately decide symbol patterns including symbols of amplitude "0" by the first decision and decide other symbols only through a polarity decision, making it possible to decide symbol patterns more accurately.

The peak power suppression method of the present invention comprises the transmitter side including a transmitting step of transmitting a known signal, and the receiver side including a receiving step of receiving the above-described known signal, a channel estimating step of estimating channels using the above-described received signal, a replica signal generating step of generating a replica signal with the first symbol string including the first symbol using the result of the above-described channel estimation, a received symbol pattern deciding step of deciding a received symbol pattern by comparing the above-described replica signal with the received symbol pattern and a demodulating step of obtaining reception data from the decided received symbol pattern.

This method makes it possible to decide symbol patterns all together and decide symbol patterns more accurately.

As is apparent from the above-described explanations, the present invention can suppress peak voltages of signals with a simple apparatus configuration without deteriorating transmission characteristics or increasing the size of the apparatus.

This application is based on the Japanese Patent Application No.2000-024515 filed on February 1, 2000, the Japanese Patent Application No.2000-208923 filed on July 10, 2000, and the Japanese Patent Application No.2000-287765 filed on September 21, 2000, entire content of which is expressly incorporated by reference herein.

### Industrial Applicability

The present invention is ideally applicable to a multi-carrier communication apparatus to which an OFDM (Orthogonal Frequency Division Multiple) system is applied, a mobile station apparatus such as a cellular phone set in a mobile unit communication system and portable TV phone set, a base station apparatus that communicates with this mobile station apparatus and digital TV broadcasting or digital speech broadcasting transmitter or receiver, etc.

## Claims

1. A multi-carrier communication apparatus comprising:
receiving means for receiving a multi-carrier signal mapped to subcarriers with a first symbol string including a first symbol with the amplitude of at least one of the in-phase component and quadrature component set to "0"; and
demapping means for demapping said multi-carrier signal to reception data.

2. The multi-carrier communication apparatus according to claim 1, wherein the demapping means demaps a multi-carrier signal mapped to subcarriers with a first symbol string including a first symbol to a second symbol string excluding said first symbol in predetermined symbol units and demodulates the demapped symbol pattern to obtain reception data.

3. The multi-carrier communication apparatus according to claim 1, wherein the demapping means demodulates a multi-carrier signal mapped to subcarriers with a first symbol string including a first symbol and converts the demodulated first data expressed with three discrete values to second data expressed with two discrete values.

4. The multi-carrier communication apparatus according to claim 2, wherein the demapping means comprises storing means for storing a table of correspondence between a first symbol string and a second symbol string and collating means for checking a received symbol string against said table.

5. The multi-carrier communication apparatus according to claim 3, wherein the demapping means comprises storing means for storing a table of correspondence between a second data pattern expressed with two discrete values and a first data pattern expressed with three discrete values.

6. The multi-carrier communication apparatus according to claim 4, further comprising retransmission requesting means for requesting the transmitting side for retransmission when the received symbol string cannot be associated with any patterns in the table.

7. The multi-carrier communication apparatus according to claim 4, further comprising error correcting means for correcting errors of a received symbol string when said symbol string cannot be associated with any patterns in the table.

8. The multi-carrier communication apparatus according to claim 1, wherein the demapping means comprises amplitude measuring means for measuring the amplitude of a symbol mapped to each subcarrier and pattern deciding means for deciding said first symbol string based on the measured amplitude.

9. The multi-carrier communication apparatus according to claim 1, wherein the demapping means comprises first deciding means for deciding a subcarrier to which a first symbol is mapped according to the number of subcarriers to which the first symbol with amplitude "0" is mapped and second deciding means for deciding symbols other than the symbol in said symbol string decided to be the first symbol through a polarity decision.

10. The multi-carrier communication apparatus according to claim 1, wherein the demapping means performs demapping by associating a plurality of first symbol strings with one data pattern in predetermined symbol units.

11. The multi-carrier communication apparatus according to claim 1, wherein the demapping means comprises combining means for combining a plurality of symbols as a combined symbol, first deciding means for deciding a symbol having the smallest amplitude value of said combined symbol as a first symbol and second deciding means for making a polarity decision on symbols other than said first symbol.

12. The multi-carrier communication apparatus according to claim 11, wherein the combining means selects and combines a plurality of symbols.

13. The multi-carrier communication apparatus according to claim 11, wherein the combining means combines a plurality of symbols with an equal gain.

14. The multi-carrier communication apparatus according to claim 11, wherein the combining means combines a plurality of symbols with a maximum ratio.

15. The multi-carrier communication apparatus according to claim 1, further comprising:
channel estimating means for estimating channels using a known signal;
replica signal generating means for generating a replica signal of a first symbol string mapped to subcarriers with the first symbol string including the first symbol using the result of said channel estimation;
received symbol pattern deciding means for deciding a received symbol pattern by comparing said replica signal with the received symbol pattern; and
demodulating means for obtaining reception data from the decided received symbol pattern.

16. A multi-carrier communication apparatus comprising:
mapping means for mapping data to be sent to subcarriers with a first symbol string including a first symbol with the amplitude of at least one of the in-phase component and the quadrature component set to "0"; and
transmitting means for transmitting mapped multi-carrier signals.

17. The multi-carrier communication apparatus according to claim 16, wherein the mapping means maps the second symbol string obtained by modulating data to be sent to subcarriers with the first symbol string including the first symbol.

18. The multi-carrier communication apparatus according to claim 16, wherein the mapping means converts second data expressed with two discrete values to be sent to first data expressed with three discrete values and modulates said first data to the first symbol string including the first symbol.

19. The multi-carrier communication apparatus according to claim 17, wherein the mapping means comprises storing means for storing a table of correspondence between the first symbol string and second symbol string.

20. The multi-carrier communication apparatus according to claim 18, wherein the mapping means comprises storing means for storing a table of correspondence between a second data pattern expressed with two discrete values and a first data pattern expressed with three discrete values.

21. The multi-carrier communication apparatus according to claim 16, wherein the mapping means fixes the number of subcarriers to which the first symbol is mapped.

22. The multi-carrier communication apparatus according to claim 16, further comprising notifying means for notifying the number of subcarriers to which the first symbol is mapped.

23. The multi-carrier communication apparatus according to claim 16, wherein the Euclidean distance between a first symbol string and another first symbol string mapped by the mapping means is equal to or greater than a predetermined distance.

24. The multi-carrier communication apparatus according to claim 16, wherein a first symbol string group and another first symbol string group mapped by the mapping means have different positions of subcarriers to which the first symbol is mapped.

25. The multi-carrier communication apparatus according to claim 16, wherein the mapping means associates one data pattern with a plurality of first symbol strings and the transmitting means sends any one of said plurality of first symbol strings.

26. The multi-carrier communication apparatus according to claim 25, wherein the Euclidean distance between a first symbol string corresponding to one data piece to be sent and another first symbol string corresponding to said data to be sent mapped by the mapping means is equal to or smaller than the Euclidean distance from the other first symbol string.

27. The multi-carrier communication apparatus according to claim 16, wherein the mapping means places a first symbol on a subcarrier different from the one on which the first symbol was placed in the past in the first symbol string to be sent.

28. The multi-carrier communication apparatus according to claim 27, wherein the mapping means comprises insertion position storing means for storing the position and timing of the first symbol in the first symbol string.

29. The multi-carrier communication apparatus according to claim 27, wherein the mapping means comprises random number generating means for determining the position and timing of the first symbol in the first symbol string according to random numbers.

30. The multi-carrier communication apparatus according to claim 16, wherein the mapping means uses a set of a plurality of first symbols for the first symbol and maps from the data pattern to the first symbol string.

31. The multi-carrier communication apparatus according to claim 16, further comprising first spreading means for spreading a symbol string at a predetermined spreading rate.

32. The multi-carrier communication apparatus according to claim 31, wherein the first spreading means spreads the first symbol string including the first symbol mapped by the mapping means at a predetermined spreading rate.

33. The multi-carrier communication apparatus according to claim 31, wherein the first spreading means multiplies the second symbol string obtained by modulating data to be sent by a spreading code and the mapping means maps said second symbol string to subcarriers with the first symbol string including the first symbol.

34. The multi-carrier communication apparatus according to claim 32, further comprising serial-parallel converting means for converting from serial to parallel the first symbol string including the first symbol spread at a predetermined spreading rate by the first spreading means.

35. The multi-carrier communication apparatus according to claim 31, further comprising serial-parallel converting means for converting a symbol string from serial to parallel, wherein the first spreading means spreads said symbol string converted from serial to parallel at a predetermined spreading rate.

36. The multi-carrier communication apparatus according to claim 35, wherein the serial-parallel converting means converts from serial to parallel the first symbol string including the first symbol mapped by the mapping means.

37. The multi-carrier communication apparatus according to claim 35, wherein the mapping means maps the symbol string spread by the first spreading means.

38. The multi-carrier communication apparatus according to claim 35, further comprising second spreading means for spreading the first symbol string including the first symbol mapped by the mapping means at a predetermined spreading code, wherein the serial-parallel converting means performs serial-parallel conversion on the first symbol string multiplied by said spreading code by the second spreading means.

39. The multi-carrier communication apparatus according to claim 35, further comprising second spreading means for spreading the second symbol string at a predetermined spreading rate, wherein the serial-parallel converting mans performs serial-parallel conversion on the second symbol string multiplied by said spreading code by the second spreading means and the mapping means performs mapping processing on the signal spread by the first spreading means.

40. The multi-carrier communication apparatus according to claim 38, further comprising two-dimensional interleave means for performing chip-by-chip rearrangement on a spread signal in order of subcarriers and in order of transmission times.

41. The multi-carrier communication apparatus according to claim 31, further comprising third spreading means for spreading the signal spread by the first spreading means using spreading codes which differ from one communication apparatus to another at a predetermined spreading rate.

42. The multi-carrier communication apparatus according to claim 41, further comprising interleaving means for performing chip-by-chip rearrangement on the signal spread by the third spreading means.

43. The multi-carrier communication apparatus according to claim 31, further comprising interleaving means for performing chip-by-chip rearrangement on the signal spread by the first spreading means.

44. The multi-carrier communication apparatus according to claim 43, further comprising third spreading means for spreading the signal rearranged chip by chip by the interleaving means using codes which differ from one communication apparatus to another at a predetermined spreading rate.

45. A communication terminal apparatus equipped with a multi-carrier communication apparatus, said multi-carrier communication apparatus comprising:
receiving means for receiving a multi-carrier signal mapped to subcarriers with a first symbol string including a first symbol with the amplitude of at least one of the in-phase component and quadrature component of the communication terminal apparatus set to "0"; and
demapping means for demapping said multi-carrier signal to reception data.

46. Abase station apparatus equipped with a multi-carrier communication apparatus, said multi-carrier communication apparatus comprising:
receiving means for receiving a multi-carrier signal mapped to subcarriers with a first symbol string including a first symbol with the amplitude of at least one of the in-phase component and quadrature component of the communication terminal apparatus set to "0"; and
demapping means for demapping said multi-carrier signal to reception data.

47. A communication terminal apparatus equipped with a multi-carrier communication apparatus, said multi-carrier communication apparatus comprising:
mapping means for mapping data to be sent to subcarriers with a first symbol string including a first symbol with the amplitude of at least one of the in-phase component and quadrature component set to "0"; and
transmitting means for transmitting the mapped multi-carrier signal.

48. Abase station apparatus equipped with a multi-carrier communication apparatus, said multi-carrier communication apparatus comprising:
mapping means for mapping data to be sent to subcarriers with a first symbol string including a first symbol with the amplitude of at least one of the in-phase component and quadrature component set to "0"; and
transmitting means for transmitting the mapped multi-carrier signal.

49. A peak power suppression method with the transmitter side comprising:
a mapping step of mapping data to be sent to subcarriers with a first symbol string including a first symbol; and
a transmitting step of transmitting the mapped multi-carrier signal, and
the receiver side comprising:
a receiving step of receiving the multi-carrier signal mapped to a subcarrier with the first symbol string including said first symbol; and
a demapping step of demapping said multi-carrier signal to reception data.

50. The peak power suppression method according to claim 49, wherein in the mapping step, the second symbol string obtained by modulating data to be sent is mapped to subcarriers with the first symbol string including the first symbol.

51. The peak power suppression method according to claim 49, wherein in the mapping step, second data expressed with two discrete values to be sent is converted to first data expressed with three discrete values and said first data is modulated to a first symbol string including the first symbol.

52. The peak power suppression method according to claim 49, wherein in the demapping step, a multi-carrier signal mapped to subcarriers with the first symbol string including the first symbol is demapped to a second symbol string excluding said first symbol in predetermined symbol units and the demapped symbol pattern is demodulated to obtain reception data.

53. The peak power suppression method according to claim 49, wherein in the demapping step, a multi-carrier signal mapped to subcarriers with the first symbol string including the first symbol is demodulated and the demodulated first data expressed with three discrete values is converted to second data expressed with two discrete values.

54. The peak power suppression method according to claim 49, wherein the demapping step includes an amplitude measuring step of measuring the amplitude of a symbol mapped to each subcarrier and a pattern deciding step of deciding said first symbol string based on the measured amplitude.

55. The peak power suppression method according to claim 49, the transmitter side further comprising a notifying step of notifying the number of subcarriers to which a first symbol with amplitude "0" is mapped, and
the demapping step on the receiver side further comprising:
a first deciding step of deciding a subcarrier to which said first symbol is mapped according to the number of subcarriers to which the first symbol with amplitude "0" is mapped; and
a second deciding step of deciding polarity about symbols other than said first symbol.

56. The peak power suppression method according to claim 49, the transmitter side further comprising a transmitting step of transmitting a known signal, and
the receiver side further comprising:
a receiving step of receiving said known signal;
a channel estimating step of estimating channels using said received signal;
a replica signal generating step of generating a replica signal with the first symbol string including the first symbol using the result of said channel estimation;
a received symbol pattern deciding step of deciding a received symbol pattern by comparing said replica signal with the received symbol pattern; and
a demodulating step of obtaining reception data from the decided received symbol pattern.
